(19) Europäisches Patentamt / European Patent Office / Office européen des brevets

(11) **EP 1 987 043 B1**

(12) **EUROPEAN PATENT SPECIFICATION**

(45) Date of publication and mention of the grant of the patent:
**27.05.2015 Bulletin 2015/22**

(51) Int Cl.:
*C07F 11/00* (2006.01)  *C07F 1/00* (2006.01)
*C07F 7/00* (2006.01)  *C08G 79/00* (2006.01)
*C08L 65/00* (2006.01)  *C08L 79/04* (2006.01)

(21) Application number: **07710628.4**

(22) Date of filing: **09.02.2007**

(86) International application number:
**PCT/CA2007/000216**

(87) International publication number:
**WO 2007/090295 (16.08.2007 Gazette 2007/33)**

(54) **BIREFRINGENT METAL-CONTAINING COORDINATION POLYMERS**

DOPPELBRECHENDE METALLHALTIGE KOORDINATIONSPOLYMERE

POLYMERES DE COORDINATION BIREFRINGENTS CONTENANT DES METAUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.02.2006 US 771435 P**

(43) Date of publication of application:
**05.11.2008 Bulletin 2008/45**

(73) Proprietors:
• **SIMON FRASER UNIVERSITY Burnaby, British Columbia V5A 1S6 (CA)**
• **Leznoff, Daniel Bernard Vancouver BC V6J 1R6 (CA)**

(72) Inventors:
• **LEZNOFF, Daniel Bernard British Columbia V6J 1R6 (CA)**
• **KATZ, Michael Iacov North Vancouver, British Columbia V7L 2Z3 (CA)**

(74) Representative: **Duckett, Anthony Joseph et al Mathys & Squire LLP The Shard 32 London Bridge Street London SE1 9SG (GB)**

(56) References cited:
**WO-A1-2006/039817**

• **JANIAK C. ET AL.: '[Hydrotris(1,2,4-triazolyl) borato]silver(I): Structure and Optical Properties of a Coordination Polymer Constructed from a Modified Poly(pyrazolyl)borate Ligand' J. AM. CHEM. SOC. vol. 118, 1996, pages 6307 - 6308, XP003016548**
• **KATZ M.J. ET AL.: 'Structure and Multinuclear Solid-State NMR of a Highly Birefringent Lead-Gold Cyanide Coordination Polymer' J. AM. CHEM. SOC. vol. 128, 2006, pages 3669 - 3676, XP003016549**
• **PATTERSON H.H. ET AL.: 'Light-induced electron transfer in lead(II)gold(I) dicyanide' INORG. CHIM. ACTA vol. 226, 1994, pages 345 - 348, XP003016550**
• **HOSKINS B.F. ET AL.: 'Six Interpenetrating Quartz-Like Nets in the Structure of ZnAu2(CN)4' ANGEW. CHEM. INT. ED. ENGL. vol. 34, no. 11, 1995, pages 1203 - 1204, XP003016551**
• **LEZNOFF D.B. ET AL.: 'An aurophilicity-determined 3-D bimetallic coordination polymer using [Au(CN)2]-to increase structural dimensionality through gold..gold bonds in (tmeda)Cu[Au(CN)2]2' CHEM. COMMUN. vol. 3, 2001, pages 259 - 260, XP003016552**
• **DRAPER N.D. ET AL.: 'Structural Pitstops and Turnoffs on the Way to the Birefringent 2-D Layer Structure (tmeda)M[Hg(CN)2]2(HGCl4)(M = Cu, Ni)' J. INORG. ORGANOMET. POLYM. MAT. vol. 15, no. 4, 2005, pages 447 - 458, XP019400788**
• **ERXLEBEN A.: 'Structures and properties of Zn (II)coordination polymers' COORD. CHEM. REV. vol. 246, 2003, pages 203 - 228, XP003016553**

EP 1 987 043 B1

- **DRAPER N.D. ET AL.: 'Synthesis, Structure, and Properties of [(tmeda)Cu[Hg(CN)2]2][HgCl4]: A Non-Centrosymmetric 2-D Layered System that Shows Strong Optical Anisotropy' CHEM. MATER. vol. 15, 2003, pages 1612 - 1616, XP003016554**
- **FROMM ET AL.: 'Crown Ehters as Stabilizing Ligands for Asymmetric Coordination: Synthesis, Crystal Structure, and Physical Properties of [Na (DB18C6)I(1,3-dioxolane)], and (Na (DB24C8)]I(DB18C6 = Dibenzo-18-crown-6, DB24C8 = Dibezno-24-crown-8)' Z. ANORG. CHEM. vol. 628, 2002, pages 171 - 178, XP008128235**

**Description**

**REFERENCE TO RELATED APPLICATIONS**

**FIELD OF THE INVENTION**

This application relates to birefringent metal-containing coordination polymers.

**BACKGROUND OF THE INVENTION**

The controlled design and synthesis of supramolecular coordination polymers from the self-assembly of simple molecular building blocks is of intense interest due to the promise of generating functional materials. [1,2] Such functional materials may comprise polymers having conducting, magnetic, non-linear optical or zeolitic properties.[1] However, it has not previously been recognized in the prior art that coordination polymers may be particularly useful as birefringent materials and may be expressly designed for this purpose.

Birefringence refers to the decomposition of a ray of light into two rays, an extraordinary and an ordinary ray for uniaxial materials, and two extraordinary rays for biaxial materials. This effect can occur only if the structure of the material is anisotropic. The birefringence magnitude is defined by

$$\Delta n = |n_e - n_o|$$

for uniaxial crystals, where $n_o$ and $n_e$ are the refractive indices for polarizations perpendicular (ordinary) and parallel (extraordinary) to the optical axis respectively. For biaxial crystals, the birefringence magnitude is defined as the difference between two principal components of the refractive index tensor (e.g. the difference between any two of $n_\alpha$, $n_\beta$ and $n_\gamma$) defining the indicatrix of a material.

Highly birefringent materials thus have different refractive indices ($\Delta n$) along perpendicular directions of the optical axes. Most known materials have a low birefringence value ($\Delta n < 0.03$). Selected inorganic minerals, such as calcite, have birefringence values in the 0.1-0.25 range and are currently used for commercial applications which require high birefringence.[3] Such applications include optical data transmission, light refocusing and microscopy. Birefringent materials are often found, for example in common-path profilometry systems [4], compact-disk readers [5], and image processing, intraocular elements [6]. Many other devices would be much more mechanically cumbersome without birefringent materials [7-12]. In addition, birefringence-measuring instruments also require a calibrated birefringent component (often calcite mineral) and are used for a range of quality-control, stress-testing and imaging applications.

Despite a large body of literature on metal-organic polymers generally,[13] the academic literature is nearly devoid of reports exploring their birefringence.[14,15] Apart from inorganic minerals, the only other materials known to have extremely high birefringences are liquid crystals, which, due to their viscous (non-solid) nature are used for different types of applications. While some metal-containing coordinate complexes containing selected ligands have been described in the literature, no high birefringence values have been reported (indeed in most cases no birefringent, dielectric or related optical properties whatsoever have been described) [16-21].

Although soft metal centers, whose polarizability is anisotropic, are key components in a range of non-linear optical (NLO),[22] ferroelectric,[23] semiconductor[24,25] and birefringent[26] materials, the literature describing the incorporation of highly polarizable metal cations such as lead(II) as building blocks in coordination polymers is also unusually sparse.[27] The molecular coordination chemistry of lead(II) is well understood, featuring a vast number of binding modes and geometries ranging from three- to twelve-coordinate not often observed among transition metals.[28,29] As well, lead(II) compounds can have a stereochemically active lone pair of s-electrons which, depending upon their degree of $p$ character, can result in a more anisotropic geometry;[29] this effect can have a significant impact on the bulk properties of the material.

The majority of reported lead(II)-based coordination polymers contain bridging halide ligands.[30] The f(PbBr$_2$)$_2$($\mu$-pyrazine)] polymer contains 2-dimensional Pb-Br sheets, which are distorted due to the stereochemical lone pair. The sheets are linked to one another via pyrazine ligand connectors.[30a] Such halide-bridged polymers, particularly those with iodide units, show a large third-harmonic NLO response with short response time (e.g., for the layered polymer (C$_6$H$_{13}$NH$_3$)$_2$PbI$_4$).[22f] By incorporating a chiral organic fragment, large second-order NLO properties have been observed.[22e] Similar polymers containing tin(II) ions, which are less polarizable, yet still contain a potentially stereochemically active lone pair of electrons have also been investigated.[24] These organic-inorganic hybrid materials show properties comparable to the best organic semiconductors made by vacuum evaporation, but allow a synthetically simpler route to highly ordered films. Conducting materials have also been synthesized with these tin(II) polymers by simply changing the organic portion of the polymer.[25]

Another common bridging unit is the family of cyanometallates $[M(CN)_x]^{n-}$, but within the vast cyanometallate coordination polymer literature,[31,32] the only lead-containing materials include organolead(IV) polymers with $[M(CN)_6]^{2-/3-}$ (M = Fe, Ru, Co) linkers,[33,34] a $Pb_2[Fe(CN)_6]$ semiconducting material whose structure was resolved only by powder X-ray diffraction[35,36] and a lead(II) cyanoaurate system of undetermined structure exhibiting interesting luminescence behavior.[37] The inventors have been investigating $Au(CN)_2$-based coordination polymers[38-41] in an effort to utilize the unique ability of $d^{10}$-metal centres such as gold(I) to form attractive metallophilic bonds.[42-48]

The need has arisen for new forms of highly birefringent materials composed of coordination polymers. A particular need has arisen for metal-organic polymers designed to include both highly polarizable metals, such as lead, and anisotropic organic ligands.

## SUMMARY OF THE INVENTION

In accordance with the invention, coordination polymers having high birefringent values are provided. In one embodiment the invention provides a birefringent material comprising a coordination polymer having a birefringent value exceeding 0.17, or more particularly having a birefringent value exceeding 0.38, wherein said polymer comprises units having the formula:

$$M(L)_X[M'(Z)_Y]_N$$

wherein M and M' are the same or different metals capable of forming a coordinate complex with the Z moiety;
L is a ligand;
Z is selected from the group consisting of halides, pseudohalides, thiolates, alkoxides and amides;
X is between 0-12;
Y is between 2 - 9; and
N is between 1 - 5.

In particular embodiments of the invention L may be a highly anisotropic organic ligand, such as terpyridine, and Z may be a pseudohalide, such as CN.

The invention also provides a birefringent thin film comprising a birefringent material of the invention.

The invention further provides the use of a coordination polymer having a birefringent value exceeding 0.17, or more particularly having a birefringent value exceeding 0.38, as a birefringent material.

The invention further provides the use of a birefringent material of the invention as an analyte detector.

The invention further provides a method of manufacturing a birefringent device comprising incorporating in said device a coordination polymer having a birefringent value exceeding 0.17.

The invention further provides a method of manufacturing a birefringent material comprising forming said material from a coordination polymer having a birefringent value exceeding 0.17.

## BRIEF DESCRIPTION OF THE DRAWINGS

Figure 1(a) illustrates the local site geometry about the Pb(II) center of $Pb(H_2O)[Au(CN)_2]_2$(1).

Figure 1(b) is a two-dimensional slab view of $Pb(H_2O)[Au(CN)_2]_2$(1) viewed down the c-axis.

Figure 2 is an observed powder diffractogram of $Pb(H_2O)[Au(CN)_2]_2$ (1)(top); observed powder diffractogram of $Pb[Au(CN)_2]_2$ (2) (middle); and calculated powder diffractogram of $Pb[Au(CN)_2]_2$ (**2**) (bottom).

Figure 3(a) is a view of $Pb[Au(CN)_2]_2$ (2) showing the column aligned with the c-axis highlighting the Pb (II) coordination sphere and intra-column aurophitic interactions (dashed lines).

Figure 3(b) illustrates a single layer of Au(I) atoms in the ab plane with Pb(II) atoms in the square channels and showing aurophilic interactions in dashed lines.

Figure 3(c) is a view showing local site geometry of Pb(II) showing the distorted square antiprism.

Figures 4(a) and (b) show formation of squares of $Pb[Au(CN)_2]_2$ (2) (b) upon dehydration of $Pb(H_2O)[Au(CN)_2]_2$ (1);

(a) via adjacent slabs, including proposed chemical shift tensor orientations with $\delta_{33}$ directed out of the plane of the page.

Figures 5(a) and 5(b) are photographs showing a crystal of Pb[Au(CN)$_2$]$_2$(H$_2$0 (1) (a) under normal light; and (b) under crossed polarizers.

Figure 6(a) shows the two-dimensional structure of Pb(2,2';6'2"-terpyridine)[Au(CN)$_2$]$_2$ (3).

Figure 6(b) shows the local site geometry about the Mn(II) center and one dimensional chain structure of Mn(2,2';6'2"-terpyridine)[Au(CN)$_2$]$_2$ · 1/3 H$_2$O (5).

Figure 7(a) shows the local site geometry about the Pb(II) center of [Pb(1,10-phenanthroline)$_2$][Au(CN)$_2$]$_2$ (6).

Figure 7(b) shows the two-dimensional brick-wall structure of [Pb(1,10-phenanthroline)$_2$][Au(CN)$_2$]$_2$ (6) viewed down the c-axis (phenanthroline ligands removed for clarity).

## DETAILED DESCRIPTION OF THE INVENTION

Throughout the following description specific details are set forth in order to provide a more thorough understanding of the invention. However, the invention may be practiced without these particulars. In other instances, well known elements have not been shown or described in detail to avoid unnecessarily obscuring the present invention. Accordingly, the specification and drawings are to be regarded in an illustrative, rather than a restrictive, sense.
This application relates to metal-containing coordination polymers having high birefringence values. As used in this patent application the term "coordination polymer" means any polymer made with coordination bonds and the term "birefringence value" means the difference ($\Delta$n) in the refractive indices (n) of a polymer as measured in two perpendicular optical or crystallographic directions. The term "high birefringence value" refers to a birefringence value exceeding 0.065. As described above, most known materials have birefringence values less than 0.03. Using a modular synthetic approach, the inventors have synthesized polymers having birefringence values ranging between 0.07 and 0.45. Such values significantly exceed comparable values for birefringent materials, such as calcite, currently in commercial use. Moreover, such polymers are more easily processible into thin films than the inorganic materials currently in use.
The polymers of the birefringent materials of the invention comprise units having the general formula M(L)$_X$[M'(2)$_Y$]$_N$, wherein M and M' are the same or different metals capable of forming a coordinate complex with the Z moiety; L is a ligand; Z is selected from the group consisting of halides, pseudohalides, thiolates, alkoxides and amides; X is between 0 - 12; Y is between 2 - 9; and N is between 1 - 5. As will be apparent to a person skilled in the art and as described herein, the coordination polymers of the invention may also comprise other constituents including additional ligands, counterbalancing ions (either cations or anions) and other metals. In one embodiment of the invention the polymer may comprise a luminescent moiety.
Metal M may include "main-group metals" such as lead (Pb), bismuth (Bi), tin (Sn), germanium (Ge), indium (In), mercury (Hg), and thallium (T1) and 1st row transition-metal (scandium (Sc), titanium (Ti), vanadium(V), chromium (Cr), manganese (Mn), iron (Fe), cobalt (Co), nickel (Ni), copper (Cu), zinc (Zn)). Other transition-metals or alkali and alkali earth metals may also be used including, but not limited to, (Zr), (Nb) and (Ru). Other suitable metals include rhodium (Rh) and iridium (Ir).
Metal M' may include gold (Au), silver (Ag), copper (Cu) and any other metal capable of forming a linear metal cyanide. Other suitable metals M' include nickel (Ni), palladium (Pd), platinum (Pt), gold(III) and any other metal capable of forming a square-planar metal cyanide or other non-linear cyanometallates.
The ligand L is optionally present (that is, ligand L is absent when X=0). For example, the polymers Zn[Au(CN)$_2$]$_2$ and Co[Au(CN)$_2$]$_2$ are within the scope of the invention. When present, ligand L may include any ligand capping the metal cation, including nitrogen, oxygen, sulfur or phosphorus donors. In some embodiments of the invention ligand L may be selected to enhance the birefringence of the polymer. For example, organic ligands L having desirable anisotropic and/or polarizable properties may be selected, such as heterocyclic amines (pyridines, pyrazines, bipyridines, terpyridines, naphthylamimes etc.), heterocyclic ethers, thiophenes, and aromatic hydrocarbon-containing ligands (examples include aminopyrenes, anthracene-carboxylic acids etc.). As described further below, the inventors have demonstrated that, for example, terpyridines, bipyridines and phenanthrolines are effective organic ligands may also be H$_2$O.
In some embodiments of the invention a ligand L may be selected which is highly polarizable and/or highly structurally anisotropic. The term "highly polarizable" refers to the ease with which the electron cloud of an atom or complex can be deformed, forming a dipole moment. Atoms or molecules which have electron clouds that are held relatively weakly by the nuclear charge are said to be more polarizable then atoms or molecules with small or compact electron clouds; thus, according to the Pearson "hard/soft acid base theory", "soft" atoms and ligands such as lead(II), bismuth(III), gold(I), sulfur-based and cyanide-donors are more polarizable than early transition metals and oxygen-donors. In terms of molecular polarizability, molecules that contain electrons in pi-bonds, especially conjugated systems, are generally more polarizable than those that do not. The term "highly structurally anisotropic" refers to the degree of difference in structural views in two different directions. Thus, a tetrahedral $AX_4$ or octahedral $AX_6$ moiety, due to the high symmetry of the system, is not highly structurally anisotropic. The other extreme is, for example a flat molecule such as benzene, which presents two very different structural views in two different directions (i.e. the edge and the face); naturally, there are a range of intermediate situations. A system with sufficiently high structural anisotropy will, if it contains sufficiently highly polarizable moieties, likely show a high polarization anisotropy as well (for example, a flat, highly conjugated system) and thereby likely be highly birefringent.

The Z moiety may include halides, pseudohalides, thiolates, alkoxides and amides. Suitable pseudohalides include CN, SCN, SeCN, TeCN, OCN, CNO and NNN. For example, the present invention encompasses $[Au(SeCN)_4]^-$ or $[Pt(SCN)_4]^-$ based polymers. Particular embodiments where the Z moiety is CN are described in the Examples section below.

More generally, the $[M'(Z)_Y]$ polymeric subunit may be substituted with any other divergent, bridging donor ligand, including metal-free ligands, such as pyrazine, dicyanamide or 1,3,5-tricarboxylatobenzene, providing the resulting coordination polymer exhibits birefringent properties.

Some $Au(CN)_2$-based polymers having various ligands are known in the prior art. However, as mentioned above, no high birefringence values have been reported [16-21]. In the references cited the polymer structures and solvents are noted and the particular ligands are shown in brackets. No birefringent, dielectric or related optical properties were described except for [18] for which a low dielectric constant was noted.

As described in detail below, the synthesis of the polymers of the birefringent materials of the invention may be readily accomplished in solvents such as water or alcohols. Compared to prior art approaches for producing birefringent materials, the polymers of the birefringent materials of the present invention can be prepared from extremely simple commercially available starting materials in minimal steps. Component units, such as bridging units or ligands, with predetermined functionalities may be easily incorporated into the polymers. For example, cyanometallate units such as $[Au(CN)_2]^-$ , $[Ag(CN)_2]^-$ or $[Hg(CN)_2]$ may be incorporated into polymers in conjunction with different transition metal cations and supporting ligands. The synthetic methodology, which has built-in design flexibility, low-cost and simple synthesis, is therefore an attractive feature of the invention. A general synthetic scheme is as follows:

$$[M(L)_X]^{N+} + [M'(Z)_Y]^W \rightarrow M(L)_X[M'(Z)_Y]_N$$

where M, M', L, Z, X and Y are as described above and W is -5 to 0

The polymers of the invention may be used in many different birefringent applications as discussed above. Other related applications include solvent or gas detection materials (i.e. detecting analytes by means of a change in birefringence, non-linear optical materials, high dielectric materials, and conducting materials).

EXAMPLES

The following examples will further illustrate the invention in greater detail although it will be appreciated that the invention is not limited to the specific examples.

Experimental Section 1.0 - polymer (1) and (2)

Polymer (1) is not an example of the invention, but is included for reference purposes.

General Procedures and Physical Measurements. All manipulations were performed in air. All reagents were obtained from commercial sources and used as received. Infrared spectra were recorded as KBr pressed pellets on a Thermo Nicolet Nexus 670 FT-IR spectrometer. Raman spectra were recorded on a Thermo Nicolet Nexus 670 FT-Raman spectrometer, equipped with a Nd:YAG Laser (1064 nm). Microanalyses (C, H, N) were performed at Simon Fraser University by Mr. Miki Yang. Thermogravimetric analysis (TGA) data were collected using a Shimadzu TGA-50 instrument heating at 5°/min in an air atmosphere. Solid-state luminescence data were collected at room temperature on a Photon Technology International (PTI) fluorometer, using a Xe arc lamp, and a photomultiplier detector. X-ray powder patterns were collected on a Rigaku RAXIS Rapid curved image plate area detector with graphite monochromator, utilizing Cu-K$\alpha$ radiation. One-hour scans were taken with a 0.3 $\mu$m collimator and a $\varphi$ spinning speed of 5°/sec, $\omega$ was held at 90° and $\chi$ was held at 0°. The powder was adhered to a glass fibre with grease. Peak positions for 2 were located in WinPlotr.[49] Cell parameters were determined using Dicvol[50] and Treor.[51] Further refinement of the lattice parameters was performed using the FullProf package in WinPlotr.[49] Structural models for (2) were produced with Powder Cell[52] using triclinic symmetry. The final atomic positions were placed in a crystal data file and analyzed for existing symmetry elements using the MISSYM program,[53] thereby uniquely identifying the space group.

Birefringence. The birefringence was measured by means of polarized light microscopy utilizing an Olympus BX60 microscope, on plate-shaped single crystals of (1). The optical retardation was measured using a tilting Berek (3λ) at the wavelength of 546.1 nm. The birefringence was calculated by dividing the measured retardation by the crystal thickness of 26(2) μm. A heating/cooling stage (Linkam HTMS600) mounted on the microscope was used for studying the temperature dependence (150 - 340 K) of the birefringence.

$Pb(H_2O)[Au(CN)_2]_2$ (1). The addition of a 0.5 mL aqueous solution of $K[Au(CN)_2]$ (58 mg, 0.2 mmol) to a 0.5 mL aqueous solution of $Pb(NO_3)_2$ (33mg, 0.1 mmol) generated an immediate pale yellow precipitate of $Pb(H_2O)[Au(CN)_2]_2$ (1), which was filtered and dried. Yield: 60 mg (83%). Anal. Calcd. for $C_4H_2N_4Au_2OPb$: C, 6.64%; H, 0.28%; N, 7.75%. Found: C, 6.57%; H, 0.48%; N, 7.55%. IR (KBr, cm$^{-1}$): 3556(w), 3476 (br), 2142(s), 2131(s), 1633(w), 1593(w). Raman (cm$^{-1}$): 2163(s), 2153(m).

Single crystals of (1) were synthesized as above, with both reactants dissolved in 10 mL of solvent. Slow evaporation yielded pale yellow crystals near dryness. The elemental analysis and IR spectra of the crystals were comparable with the powder.

Single crystals were also synthesized hydrothermally by heating the reactants to 125 °C, followed by slow cooling to room temperature over a three-day period.

$Pb[Au(CN)_2]_2$ (2). Solid (1) (60 mg, 0.083 mmol) was heated at 175 °C for 18 hrs, forming a powder of (2). Yield: 59 mg (100 %). Anal. Calcd. for $C_4N_4Au_2Pb$: C, 6.81%; H, 0.00%; N, 7.94%. Found: C, 6.70%; H, 0.00%; N, 7.66%. IR (KBr, cm-1): 2130 (s), 1631(br). 1385(m). Raman (cm$^{-1}$): 2154.

X-ray Crystallographic Analysis of $Pb(H_2O)[Au(CN)_2]_2$ (1). Crystallographic data for (1) are tabulated in TABLE 1. A pale yellow crystal of (1) having dimensions 0.18 x 0.17 x 0.05 mm$^3$ was glued onto a glass fiber. The data range $4° \leq 2\theta \leq 62°$ was recorded with the diffractometer control program DIFRAC[52a] and an Enraf Nonius CAD4F diffractometer with Mo $K_\alpha$ radiation. The data were corrected by integration for the effects of absorption with a transmission range 0.073 - 0.162. Data reduction included corrections for Lorentz and polarization effects. Final unit-cell dimensions were determined on the basis of 53 well-centered reflections with range $40° \leq 2\theta \leq 45°$.

The programs used for the absorption correction, and data reduction were from the NRCVAX Crystal Structure System.[53] The structure was solved and refined using CRYSTALS [53a]. Diagrams were made using ORTEP-3,[54] and POV-RAY.[55] Complex scattering factors for neutral atoms were used in the calculation of structure factors.[56]

The coordinates and anisotropic displacement parameters for the non-hydrogen atoms of (1) were refined. Hydrogen atoms were placed in geometrically calculated positions, and refined using a riding model, and a constrained isotropic thermal parameter. The final refinement using observed data ($I_o \geq 2.50\sigma(I_o)$) and statistical weights included 75 parameters for 805 unique reflections. Selected bond lengths and angles are given in Table 2.

The structure of (**1**) appears to exhibit some disorder, which is partially modeled by 4% occupancy alternate sites for the lead and gold atoms only. The alternate (4%) sites for the cyanide and water groups were not modeled due to the very low electron-density expected for these sites.

Structure of $Pb(H_2O)[Au(CN)_2]_2$ **(1)**

The addition of two equivalents of $K[Au(CN)_2]$ to a concentrated aqueous solution of $Pb(NO_3)_2$ resulted in the precipitation of the microcrystalline coordination polymer $Pb(H_2O)[Au(CN)_2]_2$ (1). The IR spectrum of (1) reveals two cyanide bands at 2140 and 2130 cm$^{-1}$, both of which are lower than the $\nu_{CN}$ of 2141 cm$^{-1}$ for $K[Au(CN)_2]$, indicating bridging to another metal. Although $\nu_{CN}$ bands in most cyanometallates blue-shift upon nitrile blinding,[31,57] the red-shift in (1) can be attributed to substantial back-bonding from the lead(II) center. The Raman spectrum also shows two $\nu_{CN}$ peaks at 2163 and 2153 cm$^{-1}$. The room temperature luminescence of **(1)** shows emission and excitation maxima at 520 and 420 nm respectively, as previously reported by Patterson.[37]

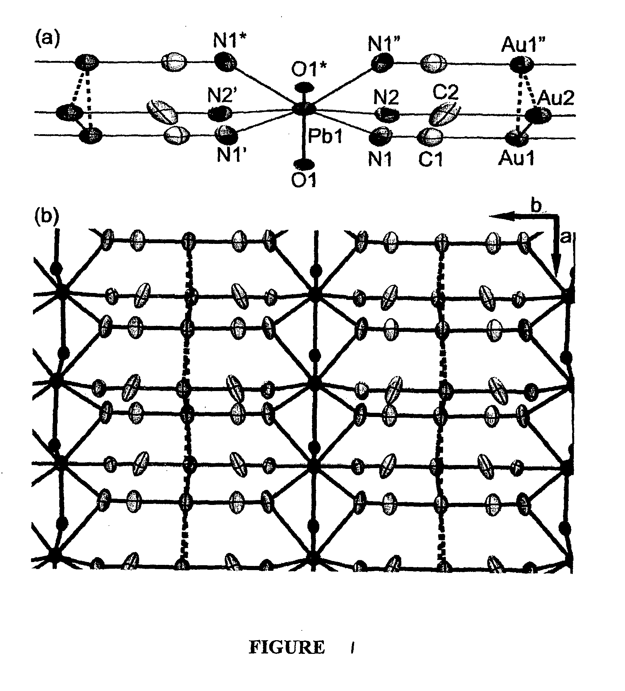

The structure of (1) contains a Pb(II) center in a bicapped trigonal prism coordination geometry, defined by six cyanide nitrogens forming the vertices of the prism and two capping water molecules (Figure 1a). The water molecules bridge neighboring lead centers to form 1-D chains which are aligned down the two-fold screw along the a-axis. The 1-D chains link to one another via $Au(CN)_2^-$ units generating a 2-D slab of edge-sharing trigonal prismatic columns (Figure 1b). Weak aurophilic interactions of 3.506(2) Å occur within each slab (Figure 1, dashed lines). These slabs stack upon each other via hydrogen bonding (O(1)-N(2) 2.86(3) Å) and aurophilic interactions (Au(1)-Au(2) 3.488(5) Å). The layer of gold atoms shows a nearly close-packed environment. The $Au(CN)_2^-$ groups are nearly eclipsed, with a dihedral angle of< 1°.[43,58] Selected bond lengths (Å) and angles (°) can be found in TABLE 2.

Slight (4%) disorder in the structure was observed and appears to arise from an alternate choice of trigonal prismatic interstices, in which the 1-D chain of Pb-OH$_2$ is shifted by half a cell in the a-direction, effectively switching the location of the lead and water; this forces the gold atoms to reorganize slightly to accommodate the shifted chain.

Consistent with the IR data, there are two distinct cyanide units in the structure: CN(1) bridges two lead centers (μ$_2$-nitrile) while CN(2) binds only to one lead atom. A similar situation was observed in Pb(dca)$_2$ (dca = dicyana-

mide).[59,60] The CN(2) nitrile also accepts a hydrogen bond from a water molecule of the adjacent slab.

The eight-coordinate lead center shows an asymmetry in the bond lengths towards one hemisphere, which has been attributed to the presence of a stereochemically active lone pair on the lead(II) producing a hemidirectional structure (Table 2).[29,61] This asymmetry is exemplified by Pb(1)-N(1) and Pb(1)-N(1') bond lengths of 2.62(3) and 2.87(3) A respectively; these are similar to Pb(dca)$_2$, which has Pb-N bond lengths of 2.679(6) and 2.868(10) A.[49,50] The Pb(1)-OH$_2$ bonds also show an asymmetry associated with the lone pair's presence, with Pb(1)-O(1) and Pb(1)-O(1*) distances of 2.57(2) Å and 2.83(2) Å respectively; these lengths are comparable to other water-bound lead complexes.[62]

In fact, there are relatively few compounds in which there are two H$_2$O units bound to a single lead(II) center; this paucity has generally been attributed to the low aqueous solubility of lead compounds.[29] The TGA of (1) demonstrates the loss of bound water over the broad temperature range of 100-200 °C, suggesting relatively strong H$_2$O-binding to the lead centre. The dehydrated structure is then stable up to 300 °C, at which point it decomposes via loss of cyanogen in a single step.[63,64]

The dehydrated compound Pb[Au(CN)$_2$]$_2$ (2) was synthesized in bulk by heating (1) in an oven overnight at 175 °C. The resulting bright yellow powder exhibits a single $\nu_{CN}$ peak at 2130 cm$^{-1}$ in the IR and one at 2154 cm$^{-1}$ in the Raman spectrum. In contrast to (1), no room temperature emission was observed for (2). Once dehydrated, (2) does not readily rehydrate. Single crystals of (1) degraded upon dehydration, precluding a structural investigation of (2) via single crystal X-ray diffraction.

Structure of Pb[Au(CN)$_2$]$_2$ (2)

The powerful combination of the multinuclear solid-state NMR and X-ray powder diffraction data permits a reasonable proposal for the structure of (2), despite the lack of single-crystal diffraction data; details of the NMR-data have previously been published.[65] Using the structure of (1) as a reference point, the loss of the H-bond at CN(2) via the removal of the water molecule would result in a CN(2) environment similar - but not identical - to that of CN(1), illustrating that only a small structural rearrangement is necessary to render the two CN-groups equivalent (as is indicated by the IR spectrum). Taking into account the above constraints, the Pb[Au(CN)$_2$]$_2$ stoichiometry, the presence of only one downshifted cyanide in the IR spectrum, and the solid-state NMR data, the structure of (2) likely contains a Pb(II) center surrounded by eight N-bound cyanides.

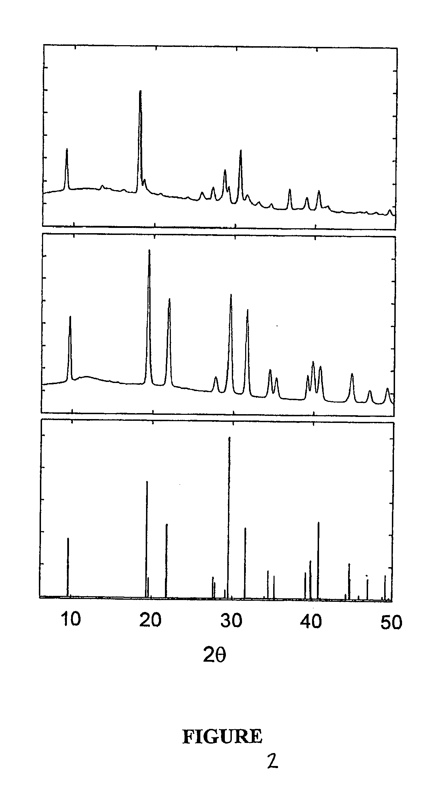

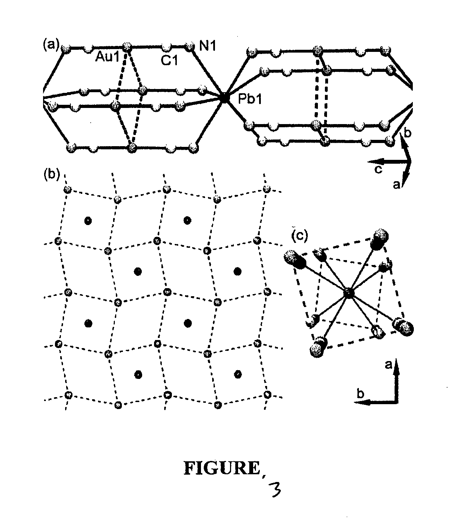

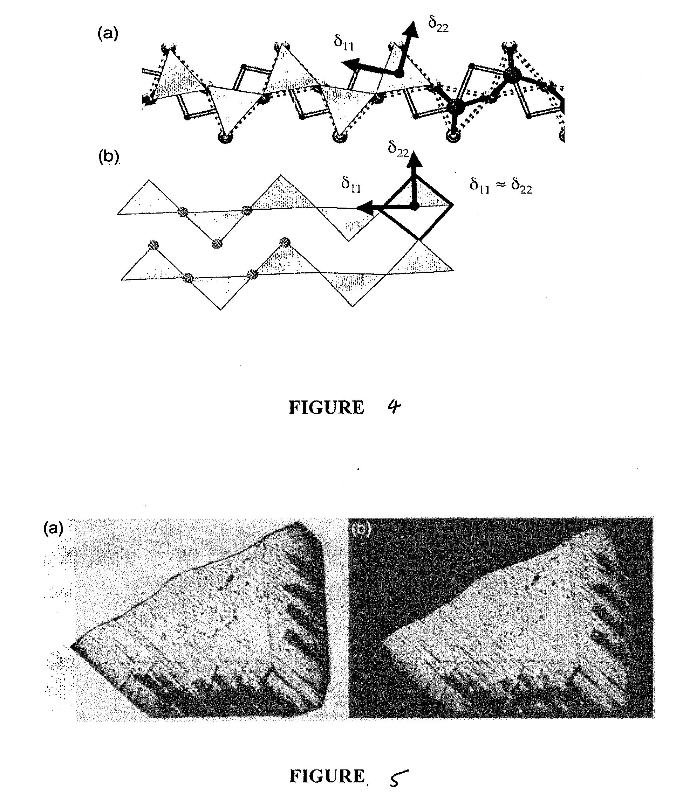

Further structural information can be gleaned from the powder X-ray diffractogram of (2) (Figure 2), which can be indexed to a tetragonal cell having dimensions a = b = 6.40105(13), c = 18.3662(6) A. Note that starting from (1), compression of all axes, followed by a simple transformation yields the observed cell for (2) (a1 → a2, 2b1 → c2, 1/2c1 → b2). Thus, using the structure of (1) as a starting point, lead and gold atoms were placed at specific fractional coordinates inside the tetragonal unit cell for (2) and the resulting crystal symmetry and calculated powder patterns were compared with the experimental data. Several different sets of positions for the gold and lead atoms in (2) were considered and those which did not conform to the NMR and IR data (i.e., axial symmetry about the Pb(II) and equivalent CN groups),[65] were rejected. Of the remaining three models, which differ slightly by either the geometry of the Au layer or the position of the Pb(II) center, only one arrangement of atoms generated a powder pattern comparable in calculated positions and intensities to those observed (Figure 2). On this basis, the structure of (2) is proposed to consist of a Pb(II) cation in an eight-coordinate distorted square prismatic geometry (Figure 3a,c), in the spacegroup I 4/m c m. Indeed, this proposed structure can be generated from the known structure of (1) with minimal atomic rearrangement by bonding of the CN(2) nitrogen to the Pb(II) of an adjacent slab (Figure 4b), followed by a minor reorganization of the gold and lead layers. In (2), the Pb(II)-based prisms stack upon one another, producing a column of prisms, which edge-share to four neighboring columns (Figure 3b). As a result, each gold center forms aurophilic interactions of 3.3 Å to four other gold centers (Figure 3, dashed lines), thereby generating a 2-D array of interlinked gold atoms in the ab plane. The aurophilic interactions in (2) are shorter than those observed in (1). The cyanide units were placed in idealized positions (i.e., using standard, fixed bond lengths for the Au(CN)2 unit) pointing at the Pb(II) in a similar fashion to that observed in (1) (Figure 1a, Figure 3a), thereby preserving a similar coordination geometry about the Pb(II). It should be noted, however, that since the cyanides do not contribute greatly to the X-ray powder pattern of (2), it is not possible to unambiguously determine whether the cyanide groups bridge two eight-coordinate Pb(II) centers symmetrically (as currently shown) or asymmetrically (as in (1)). Based solely on the placement of the cyanide groups, the Pb-N bond length is approximately 2.8 A, which is comparable to the 2.595(18), 2.65(2) and 2.87(2) Å in 1. Interestingly, the structure of (2) has an Anyuiite-type structure (i.e. AuPb2); this mineral family[70] crystallizes in the same spacegroup as (2) (I 4/m cm) with similar fractional coordinates but different unit cells depending on the constituent atoms.

Birefringence

To highlight the potential utility of highly polarizable lead(II)-containing coordination polymers, the birefringence of the plate-shaped single crystals of (1) was measured (Figure 5). X-ray analysis reveals that the large faces of the plate-shaped crystals of (**1**) are oriented perpendicular to the *a*-axis, suggesting that the slowest crystal growth direction is along the *a*-axis. The more rapid crystal growth occurring along the inter-slab axis rather than via slab extension suggests that inter-slab hydrogen bonding and aurophilic interactions may play an important role in the kinetics of crystal growth in this system. In addition, the stereochemical lone pair, whose hemisphere is found oriented close to the *a*-axis, may also inhibit rapid bond-formation in that direction. A photograph of the crystal of (**1**) used to measure the birefringence is shown in Figure 5. The fact that the crystal remains bright when observed under crossed polarizers (Figure 5b) indicates the existence of an optical anisotropy, which is expected for orthorhombic crystals. Between crossed polarizers, the crystal shows complete extinction at specific orientations. The dark streaks observed near the right and bottom crystal edges in Figure 5b can be found in Figure 5a also and thus they are opaque regions, not part of extinction. The extinction direction in an orthorhombic crystal viewed down the a-axis should coincide with the other two crystallographic axes.[71] With the crystal 45° off of the extinction position, the crystal colour appears homogeneous; the rainbow pattern observed is due to a slight variation in thickness across the platelet. This homogeneity implies that twins and significant internal stresses are absent. This is also confirmed by the fact that the extinction is observed in all parts of the crystal simultaneously: these observations indicate that the crystal is suitable for a birefringence measurement with confidence.

For the light propagating along the a-axis of (**1**), a birefringence value of $\Delta n = 7.0 \times 10^{-2}$ (0.07) at room temperature was measured. This is a high value, much larger than the $\Delta n$ of $0.9 \times 10^{-2}$ for quartz, $2.7 \times 10^{-2}$ for $Al_2O_3$, a material used for birefringent coatings,[72] and indeed larger than most other optical materials.[73] The birefringence of 1 is still below that of commercially important calcite ($17.2 \times 10^{-2}$), but is higher then the value of $6.38 \times 10^{-2}$ that the inventors obtained for a highly structurally anisotropic Cu(II)/Hg(II) 2-D layered system.[74]

Orthorhombic crystals are biaxial and their indicatrix (i.e. the surface showing the variation of the refractive index, n, with the vibration direction of light) is represented by a triaxial ellipsoid having its principal axes parallel to the crystallographic axes.[71] From this, any measured refractive index can be broken down into components along the ellipsoid axes. These three principal refractive indices can be designated as $n_a$, $n_b$ and $n_c$ for light propagating along the *a, b* and *c* crystallographic directions, respectively. The above measured birefringence is $\Delta n = \Delta n_{bc} = |n_b - n_c|$; two other values of interest, $\Delta n_{ab} = |n_a - n_b|$ and $\Delta n_{ac} = |n_a - n_c|$, remain unknown. Unfortunately, to determine the remaining birefringence values, and thereby to determine the maximum birefringence and the full indicatrix, crystals with large enough surfaces perpendicular to the *b* or *c* axes are required; these are currently unavailable due to difficulties in altering the crystal growth direction.

The measured birefringence of (**1**) remains practically unchanged upon heating to 340 K and upon cooling actually increases gradually to $7.3 \times 10^{-2}$ at 200 K, below which no further change occurs, suggesting a "freezing" of the crystal structure. This small temperature dependence of the birefringence indicates the absence of significant changes in the crystal structure in the studied temperature range of 150 - 340 K since any structural phase transformation would be indicated by an abrupt variation of the birefringence.

The high optical anisotropy can be associated with the 2-D layer crystal structure of (**1**). According to the Maxwell relation, at optical frequency, the refractive index is defined by the relative dielectric permittivity ($\epsilon$), $n^2 = \epsilon$.[84] The only contribution to $\epsilon$ at this frequency comes from the electronic polarization. The electronic permittivity is proportional in turn to the polarizability of the molecules in the material and to the local electric fields. Local fields that act on the molecule can be very different from the external field applied to the crystal, due to interactions with neighboring molecules. The electronic polarizability of covalent bonds in molecules is usually strongly anisotropic and, if the directions of the bonds are ordered in the crystal structure this leads to the anisotropy of the permittivity (i.e. to birefringence). This is best exemplified by the coordination sphere around the lead, which orients all of the $[Au(CN)_2]^-$ moieties in only one direction (Figure 1); this indicates that the polarizable lead(II) cation also plays a very significant structural role in determining the observed optical properties. Another possible reason for a large $\Delta n$ is the anisotropy of local fields.[75] However, due to the large number of atoms and differently directed bonds in the structure of (**1**) the anisotropy of total polarizability and the anisotropy of the local fields (i.e. the main sources of birefringence) cannot be even qualitatively estimated.

Experimental Section 2.0 - polymers (**3**) - (**13**)

General Procedures and Physical Measurements

All manipulations were performed in air. All reagents were obtained from commercial sources and used as received. Infrared spectra were recorded as KBr pressed pellets on a Thermo Nicolet Nexus 670 FT-IR spectrometer.

Synthetic Procedures

**Pb(2,2';6'2"-terpyridine)[Au(CN)$_2$]$_2$,(3).** To a 15 mL methanol/water (1:2) solution containing $Pb(ClO_4)_2 \cdot xH_2O$ (42 mg, 0.103 mmol) was added a 5 mL methanol solution of 2,2';6'2"-terpyridine (terpy, 23 mg, 0.099 mmol). To the resulting pale yellow solution a 20 mL methanol/water (1:1) solution of KAu(CN)$_2$ (57 mg, 0.199 mmol) was added. After 24 hrs single crystals of (**3**) are observed. The solution was allowed to slowly evaporate for a week after which it was filtered yielding pale yellow x-ray quality crystals which contain between 0 to 0.5 equivalents of $H_2O$. Yield: 47 mg (51%). Anal. Calcd for $C_{19}H_{11}N_7Au_2Pb$: C, 24.31 %; H, 1.18 %; N, 10.45 %. Found: C, 23.94 %; H, 1.28 %; N, 10.36 %. IR (KBr, $cm^{-1}$): 3110 (w), 3084 (w), 3017 (w), 2153 (s), 2137 (s), 2113 (w), 2097 (w), 1592 (br,m), 1579 (m), 1572 (m), 1565 (w), 1563 (m), 1479 (m), 1454 (w), 1449 (m), 1446 (m), 1433 (m), 1429 (w), 1396 (w), 1372 (w), 1363 (w), 1309 (m), 1295 (w), 1269 (w), 1242 (m), 193 (w), 1168 (m), 1156 (m), 1113 (w), 1092 (w), 1074 (w), 1054 (w), 1040 (w), 1012 (m), 1007 (m), 978 (w), 899 (w), 825 (w), 802 (w) 777 (s), 737 (w), 723 (w), 667 (w), 655 (m), 649 (m), 635 (m), 522 (w), 501 (w), 427 (w).

**Pb(2,2';6'2"-terpyridine)[Ag(CN)$_2$]$_2$, (4)**. To a 15 mL methanol/water (1:2) solution containing $Pb(ClO_4)_2 \cdot xH_2O$ (42 mg, 0.103 mmol) was added a 5 mL methanol solution of 2,2';6'2"-terpyridine (terpy, 23 mg, 0.099 mmol). To the resulting pale yellow solution a 20 mL methanol/water (1:1) solution of $KAg(CN)_2$ (43 mg, 0.216 mmol) was added. After 24 hrs single crystals of (**4**) are observed. The solution was allowed to slowly evaporate for a week after which it was filtered yielding pale yellow x-ray quality crystals. Yield: 49 mg (65%). Anal. Calcd for $C_{19}H_{11}N_7Ag_2Pb$: C, 30.02 %; H, 1.46 %; N, 12.90 %. Found: C, 30.21 %; H, 1.55 %; N, 12.65 %. IR (KBr, $cm^{-1}$): 3105 (w), 3082 (w), 3073 (w), 3015 (w), 2140 (s), 2131 (m), 1593 (br,m) 1579 (m), 1573 (m), 1566 (w), 1562 (m), 1482 (m), 1480 (m), 1464 (w), 1454 (w), 1449 (m), 1447 (m), 1430 (m), 1428 (w), 1394 (w), 1307 (m), 1293 (w), 1270 (w), 1260 (w), 1242 (m), 1192 (m), 1166 (m), 1155 (w), 1113 (w), 1091 (m), 1074 (w), 1053 (w), 1047 (w), 1006 (m), 978 (w), 902 (w), 833 (w), 825 (w), 802 (w), 776 (s), 737 (w), 727 (w), 722 (w), 667 (w), 655 (m), 650 (m), 635 (m), 523 (w), 501 (w).

**Mn(2,2';6'2"-terpyridine)[Au(CN)$_2$]$_2$ · 1/3 H$_2$O,** (5). To a 5 mL methanol/water (1:1) solution containing $MnCl_2 \cdot 4H_2O$ (20 mg, 0.101 mmol) was added a 5 mL methanol/water (1:1) solution of 2,2';6'2"-terpyridine (terpy, 23 mg, 0.099 mmol). To the resulting yellow solution a 10 mL methanol/water (1:1) solution of $KAu(CN)_2$ (57 mg, 0.199 mmol). After 3 hr thin needles of (**5**) are observed. Larger x-ray quality single crystals of (**5**) are produced hydrothermally which contain between 0 to 0.5 equivalents of $H_2O$. Yield: 38 mg (48%). Anal. Calcd for $C_{19}H_{11.66}N_7Au_2MnO_{0.33}$: C, 28.81 %; H, 1.48 %; N, 12.38 %. Found: C, 29.05 %; H, 1.51 %; N, 12.29%. IR (KBr, $cm^{-1}$): 3520 (br,s), 3437 (br,s), 3112 (w), 3105 (w), 3087 (w), 3074 (w), 3064 (w), 2170 (s), 2158 (m), 2151 (m), 1630 (w), 1593 (br,m), 1578 (m), 1571 (m), 1477 (m), 1475 (m), 1460 (w), 1450 (m), 1447 (m), 1438 (w), 1434 (m), 1338 (w), 1315 (m), 1297 (w), 1254 (w), 1247 (m), 1232 (w), 1186 (m), 1165 (m), 1158 (m), 1099 w), 1093 (w), 1073 (w), 1051 (w), 1043 (w), 1020 (m), 1014 (m), 890 (m), 830 (w), 797 (w), 768 (w), 741 (w), 731 (w), 661 (m), 651 (m), 639 (m), 472 (m)).

**[Pb(1,10-phenanthroline)$_2$][Au(CN)$_2$]$_2$ (6)**. To a 15 mL methanol/water (1:1) solution containing $Pb(ClO_4)_2 \cdot xH_2O$ (40 mg, 0.098 mmol) was added a 15 mL methanol/water (2:1) solution of 1,10-phenanthroline monohydrate (phen, 40 mg, 0.202 mmol). To the resulting solution a 20 mL methanol/water (1:1) solution of $KAu(CN)_2$ (56 mg, 0.194 mmol) was then added. Crystals began to form almost immediately. The mixture was allowed to settle overnight, after which it was filtered yielding clear, colourless x-ray quality crystals of [Pb(1,10-phenanthroline)$_2$][Au(CN)$_2$]$_2$ (6). Yield: 73 mg (70 %). Anal. Calcd for $C_{28}H_{16}N_8Au_2Pb$: C, 31.55%; H, 1.51%; N, 10.51%. Found: C, 31.74%; H, 1.55%; N, 10.38%. IR (KBr, $cm^{-1}$): 3074, (vw) 2148 (s, vCN), 1620 (w), 1590 (w), 1567 (w), 1514 (s), 1497(w), 1423 (s), 1346 (w), 1309 (vw), 1212 (vw), 1202 (vw), 1131 (w), 1091 (m), 860 (m), 837 (s) 764 (m), 726 (s), 713 (m), 632 (m). Raman: 2164 $cm^{-1}$ ($v_{CN}$).

**[Pb(2,2'-bipyridine)$_2$][Au(CN)$_2$]$_2$ (7)**. To a 10 mL methanol/water (1:1) solution containing $Pb(ClO_4)_2 \cdot xH_2O$ (42 mg, 0.103 mmol) was added a 10 mL methanol/water (1:1) solution of 2,2'-bipyridine (bipy, 30 mg, 0.192 mmol). To the resulting solution a 20 mL methanol/water (1:1) solution of $KAu(CN)_2$ (56 mg, 0.194 mmol) was added. The solution initially became cloudy but after 24 hrs single crystals began to deposit. The solution was allowed to slowly evaporate for a week, after which it was filtered, yielding clear colourless X-ray quality crystals of [Pb(2,2'bipyridine)$_2$][Au(CN)$_2$]$_2$ (7). Yield: 54 mg (55%). Anal. Calcd for $C_{24}H_{16}N_8Au_2Pb$: C, 28.32%; H, 1.58%; N, 11.01%. Found: C, 28.42%; H, 1.68%; N, 11.17%. IR (KBr, $cm^{-1}$): 3118 (w), 3106 (w), 3076 (w), 3059 (w), 3041 (w), 2154 (m, vCN), 2140 (s, vCN), 1595 (m), 1576 (m), 1566 (m), 1493 (m), 1475 (m), 1439 (m), 1319 (m), 1244 (m), 1206 (w), 1179 (w), 1156(m), 1104 (w), 1063 (m), 1040 (w), 1008 (m), 966 (w), 958 (w), 899 (w), 884 (w), 805 (w), 766 (m), 759 (s), 734 (m), 654 (m), 640 (m), 622 (m). Raman: 2155 $cm^{-1}$ ($v_{CN}$).

**[Pb(1,2-ethylenediamine)][Au(CN)$_2$]$_2$ (8)**. To a 10 mL acetonitrile solution containing $Pb(ClO_4)_2 \cdot xH_2O$ (40 mg, 0.098 mmol) was added an acetonitrile solution containing 1,2-ethylenediamine (en, 1 mL of a 0.1 M stock solution, 0.100 mmol). To the resulting solution a 10 mL acetonitrile solution of $[^nBu_4N][Au(CN)_2] \cdot \frac{1}{2}H_2O$ (100 mg, 0.200 mmol) was added. A precipitate formed immediately. The resulting mixture was allowed to settle overnight, after which it was filtered to obtain microcrystalline [Pb(1,2-ethylenediamine)][Au(CN)$_2$]$_2$ (8). Yield: 50 mg (66%). Anal. Calcd for $C_6H_8N_6Au_2Pb$: C, 9.42%; H, 1.05%; N, 10.98%. Found: C, 9.34%; H, 1.02%; N, 10.84%. IR (KBr, $cm^{-1}$): 3320 (m), 3238 (m), 3209 (m), 3126 (m), 2954 (w), 2932 (w), 2920 (w), 2880 (w), 2866 (w), 2156 (m, vCN), 2143 (s, vCN), 2100 (w, vCN), 1573 (m), 1309 (w), 1120 (w), 1082 (w), 1053 (w), 1022 (m), 984(m), 964 (m), 864(w), 495 (m). Raman: 2145 $cm^{-1}$ ($v_{CN}$), 2157 $cm^{-1}$ ($v_{CN}$), 2172 $cm^{-1}$ ($v_{CN}$). Single crystals of (**8**) were obtained by altering the Pb:ethylenediamine:Au ratio to 1:1.5:1 and mixing them in 50 mL of acetonitrile, after which the solution was left covered overnight. Small x-ray quality crystals and some powder of (**8**) were deposited. The crystals had comparable IR and simulated powder x-ray data to the bulk powder.

**[Bi(terpy)(OH)(DMSO)]$_2$[Au(CN)$_2$]$_4$·2H$_2$O (9)**. To a 0.5 mL DMSO solution containing Bi(NO$_3$)$_3$·5H$_2$O (24 mg, 0.049 mmol) was added a 1 mL DMSO solution of terpy (11 mg, 0.047 mmol). To the resulting solution was added a 1.5 mL solution of KAu(CN)$_2$ (44 mg, 0.153 mmol). Slow evaporation resulted in the formation of yellow crystals of [Bi(terpy)(OH)(DMSO)]$_2$[Au(CN)$_2$]$_4$·2H$_2$O (9). Yield: low (several mg of crystals). Anal. Calcd for C$_{42}$H$_{40}$N$_{14}$Au$_4$Bi$_2$O$_6$S$_2$: C, 23.94%; H, 1.91%; N, 9.31%. Found: C, 23.68%; H, 1.89%; N, 9.33%. IR (KBr, cm$^{-1}$): 3534 (m), 3430 (m, br) 3079 (w), 3067 (w), 3014 (w), 2920 (m), 2162 (m), 2144 (sh), 2136 (s), 2130 (sh), 1593(m), 1578 (m), 1571 (m), 1478 (m), 1446 (m), 1435 (m), 1305 (m), 1289 (w), 1255 (w), 1242 (m), 1190 (w), 1172 (w), 1160 (w), 1115 (w), 1104 (w), 1092 (w), 1071 (w), 1031 (w), 1008 (m), 989 (m), 951 (m), 944 (m), 791 (w), 770 (s), 724 (w), 720 (w), 670 (m), 653 (m), 639 (w), 633 (w), 628 (w).

**[Bi(phen)$_2$(OH)]$_2$[Au(CN)$_2$]$_4$·2H$_2$O·2DMSO (10)**. To a 0.5 mL DMSO solution containing Bi(NO$_3$)$_3$·5H$_2$O (25 mg, 0.052 mmol) was added a 1 mL DMSO solution of phen (11 mg, 0.061 mmol). To the resulting solution was added a 1.5 mL solution of KAu(CN)$_2$ (43 mg, 0.149 mmol). Slow evaporation resulted in the formation of white crystals of [Bi(phen)$_2$(OH)]$_2$[Au(CN)$_2$]$_4$·2H$_2$O·2DMSO (10). Yield: low (several mg of crystals). Anal. Calcd for C$_{58}$H$_{42}$N$_{16}$Au$_4$Bi$_2$O$_4$S$_1$: C, 30.73%; H, 2.15%; N, 9.56%. Found: C, 30.66%; H, 2.06%; N, 9.37%. IR (KBr, cm$^{-1}$): 3430 (br), 3064 (w), 3047 (w), 3032 (w), 3002 (w), 2993 (w), 2910 (w), 2148 (w), 2140 (s), 2137 (sh), 1622 (w), 1590 (w), 1565 (w), 1511 (m), 1496 (m), 1422 (s), 1347 (m), 1339 (m), 1314 (w), 1222 (m), 1207 (w), 1144(m), 1098 (m), 1017 (m), 950 (m), 860 (m), 852 (m), 840 (s), 760 (m), 731 (s), 727 (m), 723 (m), 717 (m), 710 (m), 640 (m), 634 (w), 625 (m).

**α-Zn[Au(CN)2]2 (11)**. A modified synthesis to that previously published was used [76]. To a 15 mL water solution containing Zn(ClO$_4$)$_2$·6H$_2$O (37 mg, 0.099 mmol) was added a 15 mL aqueous solution of KAu(CN)$_2$ (57 mg, 0.198 mmol). Crystals began to form after two days of slow evaporation yielding colourless x-ray quality crystals of α - Zn[Au(CN)$_2$]$_2$ (11). Yield: 40 mg (72 %). Anal. Calcd for C$_4$H$_0$N$_4$Au$_2$Zn: C, 8.53%; H, 0.00%; N, 9.94%. Found: C, 8.84% 0.00%; N, 10.15%. IR (KBr, cm-1): 2216 (m), 2198 (s), 2158 (m), 517 (m).

**β-Zn[Au(CN)$_2$]$_2$ (12)**. To a 3 mL acetonitrile solution containing Zn(NO$_3$)$_2$·6H$_2$O (30 mg, 0.101 mmol), a 3 mL acetonitrile solution of (Bu$_4$N)Au(CN)$_2$·½H$_2$O (100 mg, 0.200 mmol) was added dropwise while swirling, yielding an immediate precipitate of β - Zn[Au(CN)$_2$]$_2$(MeCN)$_x$. The mixture was centrifuged, after which the solvent was removed and the powder allowed to dry overnight. The sample was washed with three portions of acetonitrile (6 mL) through filter paper to remove any impurity salts. When exposed to air, the resulting powder loses acetonitrile to form β - Zn[Au(CN)$_2$]$_2$ (12). Yield: 40 mg (71 %). Anal. Calcd for C$_4$H$_0$N$_4$Au$_2$Zn: C, 8.53%; H, 0.00%; N, 9.94%. Found: C, 8.51%; H, 0.00%; N, 9.78%. IR (KBr, cm$^{-1}$): 2221 (sh), 2199 (s), 2158 (w), 521 (m).

**γ - Zn[Au(CN)$_2$]$_2$ (13)**. To a 1 mL acetonitrile solution containing Zn(ClO$_4$)$_2$·6H$_2$O (37 mg, 0.099 mmol), a 1 mL acetonitrile solution of (Bu$_4$N)Au(CN)$_2$·½H$_2$O (150 mg, 0.300 mmol) was added dropwise while swirling, yielding an immediate precipitate of γ - Zn[Au(CN)$_2$]$_2$ (13). The mixture was centrifuged, after which the solvent was removed and the powder allowed to dry overnight. The sample was washed with three portions of acetonitrile (2 mL) through filter paper to remove any impurity salts. Yield: 40 mg (71%). Anal. Calcd for C$_4$H$_0$N$_4$Au$_2$Zn: C, 8.53%; H, 0.00%; N, 9.94%. Found: C, 8.62%; H, 0.00%; N, 9.82%. IR (KBr, cm$^{-1}$): 2187 (s), 2149 (w), 526 (m).

<u>Sample Structural Diagrams</u>

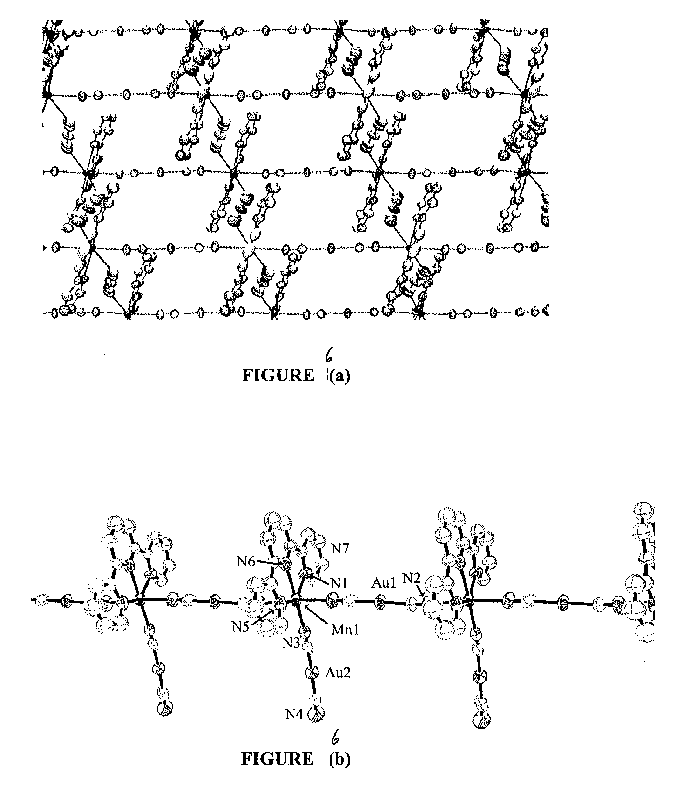

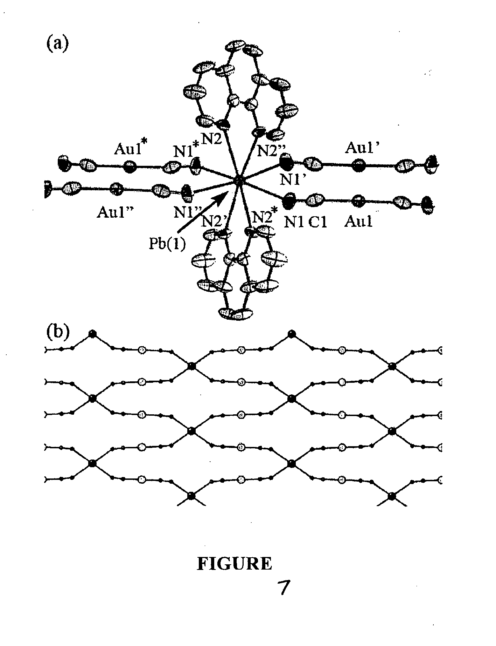

Figure 6(a) shows the two-dimensional structure of Pb(2,2';6'2"-terpyridine)[Au(CN)$_2$]$_2$ (3). Figure 6(b) shows the local site geometry about the Mn(II) center and one dimensional chain structure of Mn(2,2';6'2"-terpyridine)[Au(CN)$_2$]$_2$ • 1/3 H$_2$O (5). Figure 7(a) shows the local site geometry about the Pb(II) center of [Pb(1,10-phenanthroline)$_2$][Au(CN)$_2$]$_2$ (6). Figure 7(b) shows the two-dimensional brick-wall structure of [Pb(1,10-phenanthroline)$_2$][Au(CN)$_2$]$_2$ (6) viewed down the c-axis (phenanthroline ligands removed for clarity).

<u>X-ray Crystallographic analysis</u>

Crystallographic data for structures of (3)-(8) are collected in TABLE 3. The crystals were mounted on glass fibers using epoxy adhesive. Crystal descriptions for each compound are as follows: (3) was a colourless plate having dimensions 0.29 x 0.20 x 0.06 mm$^3$; (4) was a colourless block having dimensions 0.34 x 0.26 x 0.03 mm$^3$; (5) was a colourless block having dimensions 0.28 x 0.14 x 0.06 mm$^3$; (6) was a colourless plate having dimensions 0.40 x 0.40 x 0.02 mm$^3$; (7) was a colourless block having dimensions 0.28 x 0.14 x 0.11 mm$^3$; (8) was a colourless block having dimensions 0.11 x 0.08 x 0.06 mm$^3$. The data for (3)-(8) were collected at room temperature using the diffractometer control program D1FRAC and an Enraf Nonius CAD4F diffractometer with Mo Kα, radiation. The following data ranges were recorded: (3) = 4 ° < 2θ ≤ 55 °; (4) = 4 ° ≤ 2θ ≤ 55 °; (5) = 4° ≤ 2θ ≤ 48°; (6) = 4° < 2θ ≤ 60°; (7) = 4° ≤ 2θ ≤ 50°. The data was corrected by integration for the effects of absorption using a semi-empirical psi-scan method with the following transmission ranges: (3) = 0.01 1779 - 0.095573; (4) = 0.135198 - 0.317529; (5) = 0.018497 - 0.070186; (6) = 0.042445 - 0.195921; (7) = 0.1015-0.0365. Data reduction included corrections for Lorentz and polarization effects.

Final unit-cell dimensions were determined based on the following well-centered reflections: **(3)** = 32 reflections with range 40 ° ≤ 2θ ≤ 47 °; **(4)** = 30 reflections with range 29 ° ≤ 2θ ≤ 32 °; **(5)** = 32 reflections with range 27 ° ≤ 2θ ≤ 30 °; **(6)** = 40 reflections with range 40° ≤ 2θ ≤ 44°; **(7)** = 42 reflections with range 30° ≤ 2θ ≤ 32°.

The data for **(8)** was measured at 100(2) K on a Bruker Kappa APEX I CCD area detector system equipped with a graphite monochromator and a Mo Kα sealed tube. The detector was placed at a distance of 2.5 cm. from the crystal. A total of 210 frames were collected with a scan width of 2.0° in ω and an exposure time of 120 sec/frame. The total data collection time was 7.00 hours. Data were corrected for absorption effects using the numerical face-indexed technique (SADABS).

For all six compounds **(3) - (8),** coordinates and anisotropic displacement parameters for the non-hydrogen atoms were refined. Hydrogen atoms were placed in calculated positions (d C-H 0.93 - 0.95 Å, d O-H 0.90) and initially refined with soft restraints on the bond lengths and angles to regularise their geometry; afterwards their coordinate shifts were linked with those of the respective carbon or nitrogen atoms during refinement. Isotropic thermal parameters for the hydrogen atoms were initially assigned proportionately to the equivalent isotropic thermal parameters of their respective carbon or nitrogen atoms. Subsequently the isotropic thermal parameters for the C-H hydrogen atoms were constrained to have identical shifts during refinement.

The programs used for all absorption corrections, data reduction, and processing were from the *NRCVAX* Crystal Structure System software. All structures were solved using Sir 92, expanded using Fourier techniques and refined using *CRYSTALS.* Complex scattering factors for neutral atoms were used in the calculation of structure factors.

Birefringence

The birefringence of **(3)-(5)** were measured by means of polarized light microscopy utilizing an Olympus BX60 microscope, on plate-shaped single crystals of **(3)** and **(4),** and needle-shaped single crystals of **(5).** The optical retardation was measured using a tilting Berek compensator (3λ for **(3),** 20λ for **(4)** and **(5)** at the wavelength of 546.1 nm at room temperature. The birefringence was calculated by dividing the measured retardation by the crystal thickness of 4.85(10) μm **for (3);** 28(2) μm for **(4);** 32.7(7) μm for **(5).** The birefringence for compounds **(3)-(5)** was measured and found to be 0.396(8) for **(3),** 0.43(4) for **(4),** and 0.388(8) for **(5).**

REFERENCES

[1] a) Janiak, C. Dalton Trans. 2003, 2781. b) Cassoux, P.; Valade, L.; Kobayashi, H.; Kobayashi, A.; Clark, R. A.; Underhill, A. E. Coord. Chem. Rev. 1991, 110, 115. c) Ouahab, L. J. Chem. Soc., Dalton Trans. 1997, 9, 1909. d) Decurtins, S.; Pellaux, R.; Antorrena, G.; Palacio, F. Coord. Chem. Rev. 1999, 190 -- 192, 841. e) Roundhill, D. M.; Fackler, J. P., Jr. Optoelectronic Properties of Inorganic Compounds; Plenum Press: New York, 1999.

[2] a) Moler, D. B.; Li, H.; Chen, B.; Reineke, T. M.; O'Keeffe, M.; Yaghi, O. M. Acc. Chem. Res. 2001, 34, 319. b) Chesnut, D. J.; Hagrman, D.; Zapf, P. J.; Hammond, R. P.; LaDuca, R.; Haushalter, R. C.; Zubieta, J. Coord. Chem. Rev. 1999, 192, 737.

[3] Wahlstrom, E. E. Optical Crystallography; John Wiley and Sons: New York, Toronto, 1979; Hodgkinson, I. J.; Wu, Q. H., Birefringent Thin Films and Polarizing Elements; World Scientific Publishing Co. Pte. Ltd.: River Edge, 1997; Veber, M. J., Handbook of Optical Materials; C R C Press, 2003; Chelkowski, A., Dielectric Physics; Elsevier Scientific Pub. Co: Amsterdam ; New York, 1980; Newnham, R. E., Structure-property Relations; Springer-Verlag: New York, Heidelberg, Berlin, 1975.

[4] Chou, C.; Shyu, J.-C.; Huang, Y.-C.; Yuan, C.-K. Applied Optics 1998, 37, 4137.

[5] Kinnstatter, K.; Ojima, M.; Yonezawa, S. Applied Optics 1990, 29, 4408.

[6] Lesso, J. P.; Duncan, A. J.; Sibbett, W.; Padgett, M. J. Applied Optics 2000, 39, 592.

[7] Davis, J. A.; Evans, G. H.; Crabtree, K.; Moreno, I. Applied Optics 2004, 43, 6235.

[8] Kikuta, H.; Iwata, K.; Shimomura, H. J. Opt. Soc. Am. A 1992, 9, 814.

[9] Sanyal, S.; Ghosh, A. Applied Optics 2000, 39, 2321.

[10] Park, J.-H.; Jung, S.; Choi, H.; Lee, B. Optics Express 2003, 11, 1862.

[11] Waagaard, O. H.; Skaar, J. J. Opt. Soc. Am. A 2004, 21, 1207.

[12] Sanyal, S.; Bandyopadhyay, P.; Ghosh, A. Opt. Eng. 1998, 37, 592.

[13] Lefebvre, J. and Leznoff, D.B., In Metal and Metalloid-containing Polymers, Wiley, 2005, 5, 155; Janiak, C., Dalton Trans., 2003, 2781; Cassoux, P.; Valade, L.; Kobayashi, H.; Kobayashi, A.; Clark, R. A.; Underhill, A. E., Coord. Chem. Rev. 1991, 110, 115; Ouahab, L., J. Chem. Soc., Dalton Trans. 1997, 9, 1909; Decurtins, S.; Pellaux, R.; Antorrena, G.; Palacio, F., Coord. Chem. Rev. 1999, 190 -- 192, 841; Roundhill, D. M.; Fackler, J. P., Jr., Optoelectronic Properties of Inorganic Compounds; Plenum Press: New York, 1999; Moler, D. B.; Li, H.; Chen, B.;

Reineke, T. M.; O'Keeffe, M.; Yaghi, O. M., Acc. Chem. Res. 2001, 34, 319; Chesnut, D. J.; Hagrman, D.; Zapf, P. J.; Hammond, R. P.; LaDuca, R.; Haushalter, R. C.; Zubieta, J., Coord. Chem. Rev. 1999, 192, 737; Miller, J. S,. Inorg. Chem. 2000, 39, 4392; Verdaguer, M.; Bleuzen, A.; Marvaund, V.; Vaissermann, J.; Seuleiman, M.; Desplanches, C.; Sciuller, A.; Train, C.; Garde, R.; Gelly, G.; Lomenech, C.; Rosenman, I.; Veillet, P.; Cartier, C.; Villain, F., Coord. Chem. Rev. 1999, 190, 1023.

[14] Draper, N.D.; Batchelor, R.J.; Sih, B.C.; Ye, Z.-G.; Leznoff, D.B. "Synthesis, structure and properties of (tmeda)Cu[Hg(CN)2]2[HgCl4]: A non-centrosymmetric 2-D layer structure that exhibits strong optical anisotropy", Chem. Mater., 2003, 15, 1612-1616.

[15] Janiak, C.; Scharmann, T. G.; Albrecht, P.; Marlow, F.; Macdonald, R., J. Am. Chem. Soc. , 1996, 118, 6307; Fromm, K. M.; Gueneau, E. D.; Rivera, J.-P.; Bernardinelli, G. Z. Anorg. Allg. Chem., 2002, 628, 171.

[16] Dong, W.; Zhu, L.-N.; Sun, Y.-Q.; Liang, M.; Liu, Z.-Q.; Liao, D.-Z.; Jiang, Z.-H.; Yan, S.-P.; Cheng, P. Chem. Commun. 2003, 2544-2545. (M' = Au, M = Mn, ligand = water)

[17] Dong, W.; Zhu, L.-N.; Sun, Y.-Q.; Liang, M.; Liu, Z.-Q.; Liao, D.-Z.; Jiang, Z.-H.; Yan, S.-P.; Cheng, P. Chem. Commun. 2003, 2544-2545. (M' = Au, M = Fe, ligand/solvent = none, KFe[Au(CN)$_2$]$_3$)

[18] Abrahams, S. C. ; Zyontz, L. E.; Bernstein, J. L. J. Chem. Phys. 1982, 76, 5458. Abrahams, S. C. ; Bernstein, J. L.; Liminga, R.; Eisenmann, E. T. J. Chem. Phys. 1980, 73, 4585. (M'=Au, M = Co. ligand/solvent = none, and (KCo[Au(CN)$_2$]$_3$)

[19] Colacio, E.; Lloret, F.; Kivekaes, R.; Ruiz, J.; Suarez-Varela, J.; Sundberg, M. R. Chem. Commun. 2002, 592-593. (M'=Au, M = Co, ligand/solvent = DMF)

[20] Hoskins, B. F.; Robson, R.; Scarlett, N. V. Y. Angew. Chem. Int. Ed. Engl. 1995, 34, 1203. (M' =Au, M = Zn, ligand/solvent = none)

[21] Stier, A.; Range, K. -J. Z. Naturforsch. 1996, 51b, 698; Stier, A.; Range, K. - J. Z. Kristallogr. 1997, 212, 51; Assefa, Z.; Shankle, G.; Patterson, H. H.; Reynolds, R. Inorg. Chem. 1994, 33, 2187; Assefa, Z.; Staples, R. J.; Fackler, J. P., Jr.; Patterson, H. H.; Shankle, G. Acta Crystallogr. 1995, C51, 2527. (M' = Au and/or Ag, M = Lanthanide, ligand/solvent = water or none)

[22] a) Ye, Q.; Li, Y.-H.; Wu, Q.; Song, Y.-M.; Wang, J.-X.; Zhao, H.; Xiong, R.-G.; Xue, Z. Chem. Eur. J. 2005, 11, 988. b) Singh, N. B.; Suhre, D. R.; Green, K.; Fernelius, N.; Hopkins, F. K. J. Crystal Growth 2005, 274, 132. c) Sui, B.; Zhao, W.; Ma, G.; Okamura, T.-A.; Fan, J.; Li, Y.-Z.; Tang, S.-H.; Sun, W.-Y.; Ueyama, N. J. Mater. Chem. 2004, 14, 1631. d) Meng, X.; Song, Y.; Hou, H.; Fan, Y.; Li, G.; Zhu, Y. Inorg. Chem. 2003, 42, 1306. e) Guloy, A. M.; Tang, Z.; Miranda, P. B.; Srdanov, V. I. Adv. Mater. 2001, 13, 833. f) Kondo, T.; Iwamoto, S.; Hayase, S.; Tanaka, K.; Ishi, J.; Mizuno, M.; Ema, K.; Ito, R. Solid State Comm. 1998, 105, 503.

[23] Newnham, R. MRS Bulletin 1997, XXII, 20.

[24] Kagan, C. R.; Mitzi, D. B.; Dimitrakopoulos, C. D. Science 1999, 286, 945.

[25] Mitzi, D. B.; Wang, S.; Feild, C. A.; Chess, C. A.; Guloy, A. M. Science 1995, 267, 1473.

[26] Sigman, M. B. J.; Korgel, B. A. J. Am. Chem. Soc. 2005, 127, 10089.

[27] For selected Pb(II) coordination polymers: a) Yilmaz, V. T.; Caglar, S.; Harrison, W. T. A. Z. Anorg. Allg. Chem. 2004, 630, 948. b) Foreman, M. R.; Plater, M. J.; Skakle, J. M. S. J. Chem. Soc., Dalton Trans. 2001, 1897. c) Zhu, L.-H.; Zeng, M.-H.; Ye, B.-H.; Chen, X.-M. Z. Anorg. Allg. Chem. 2004, 630, 952. d) Li, G.; Hou, H.; Li, L.; Meng, X.; Fan, Y.; Zhu, Y. Inorg. Chem. 2003, 42, 4995. e) Shi, Y.-J.; Li, L.-H.; Li, Y.-Z.; Chen, X.-T.; Xue, Z.; You, X.-Z. Polyhedron 2003, 22, 917.

[28] a) Holloway, C., E.; Melnik, M. Main Group Metal Chemistry 1997, 20, 399. b) Parr, J. In Comprehensive coordination chemistry II: from biology to nanotechnology; Parkin, G. F. R., Ed.; Elsevier Pergamon: Boston, 2004; Vol. 3, p 545. d) Engelhardt, L. M.; Patrick, J. M.; Whitaker, C. R.; White, A. H. Aust. J. Chem. 1987, 40, 2107. e) Engelhardt, L. M.; Harrowfield, J. M.; Miyamae, H.; Patrick, J. M.; Skelton, B. W.; Soudi, A. A.; White, A. H. Aust. J. Chem. 1996, 49, 1111.

[29] Shimoni-Livny, L.; Glusker, J. P.; Bock, C. W. Inorg. Chem. 1998, 37, 1853.

[30] a) Shi, Y.-J.; Chen, X.-T.; Cai, C.-X.; Zhang, Y.; Xue, Z.; You, X.-Z.; Peng, S.-M.; Lee, G.-H. Inorg. Chem. Comm. 2002, 5, 621. b) Shi, Y.-J.; Xu, Y.; Zhang, Y.; Huang, B.; Zhu, D.-R.; Jin, C.-M.; Zhu, H.-G.; Yu, Z.; Chen, X.-T.; You, X.-Z. Chem. Lett. 2001, 678. c) Calabrese, J.; Jones, N. L.; Harlow, R. L.; Herron, N.; Thorn, D. L.; Wang, Y. J. Am. Chem. Soc. 1991, 113, 2328. d) Cui, Y.; Ren, J.; Chen, G.; Yu, W.; Qian, Y. Acta Cryst C 2000, 56, e552. e) Nordell, K. J.; Schultz, K. N.; Higgins, K. A.; Smith, M. D. Polyhedron 2004, 23, 2161. f) Morsali, A.; Mahjoub, A. Polyhedron 2004, 23, 2427.

[31] Dunbar, K. R.; Heintz, R. A. Prog. Inorg. Chem. 1997, 45, 283.

[32] a) Lefebvre, J.; Leznoff, D. B. In Metal and Metalloid-containing polymers; Wiley, 2005; Vol. 5 155 - 208. b) Iwamoto, T. In Comprehensive Supramolecular Chemistry; Lehn, J. M., Atwood, J. L., Davies, J. E. D., MacNicol, D. D., Vögtle, F., Alberti, G., Bein, T., Eds.; Pergamon Press: Oxford, 1996. c) Ohba, M.; Okawa, H. Coord. Chem. Rev. 2000, 198, 313.

[33] Brimah, A. K.; Schwarz, P.; Fischer, R. D.; Davies, N. A.; Harris, R. K. J. Organomet. Chem. 1998, 568, 1.

[34] Behrens, U.; Brimah, A. K.; Sollman, T. M.; Fischer, D. R. Organometallics 1992, 11, 1718.

[35] Zubkov, V. G.; Tyutyunnik, A. P.; Berger, I. F.; Maksimova, L. G.; Denisova, T. A.; Polyakov, E. V.; Kaplan, I. G.; Voronin, V. I. Solid State Sci. 2001, 3, 361.

[36] Zhukov, V. P.; Zainullina, V. M.; Zubkov, V. G.; Tyutyunnik, A. P.; Denisova, T. A. Solid State Sci. 2001, 3, 539.

[37] Patterson, H. H.; Bourassa, J.; Shankle, G. Inorg. Chim. Acta 1994, 226, 345.

[38] Leznoff, D. B.; Xue, B.-Y.; Patrick, B. O.; Sanchez, V.; Thompson, R. C. Chem. Commun. 2001, 3, 259.

[39] Leznoff, D. B.; Xue, B.-Y.; Stevens, C. L.; Storr, A.; Thompson, R. C.; Patrick, B. O. Polyhedron 2001, 20, 1247.

[40] Leznoff, D. B.; Xue, B.-Y.; Batchelor, R. J.; Einstein, F. W. B.; Patrick, B. O. Inorg. Chem. 2001, 40, 6026.

[41] Lefebvre, J.; Batchelor, R. J.; Leznoff, D. B. J. Am. Chem. Soc. 2004, 126, 16117.

[42] Rawashdeh-Omary, M. A.; Omary, M. A.; Patterson, H. H. J. Am. Chem. Soc. 2000, 122, 10371.

[43] Rawashdeh-Omary, M. A.; Omary, M. A.; Patterson, H. H.; Fackler, J. P., Jr. J. Am. Chem. Soc. 2001, 123, 11237.

[44] Fernandez, E. J.; Lopez-de-Luzuriaga, J. M.; Monge, M.; Olmos, M. E.; Perez, J.; Laguna, A. J. Am. Chem. Soc. 2002, 124, 5942.

[45] Fernandez, E. J.; Lopez-de-Luzuriaga, J. M.; Monge, M.; Olmos, M. E.; Perez, J.; Laguna, A.; Mohamed, A. A.; Fackler, J. P., Jr. J. Am. Chem. Soc. 2003, 125, 2022.

[46] Wang, S.; Garzon, G.; King, C.; Wang, J.-C.; Fackler, J. P., Jr. Inorg. Chem. 1989,28,4623.

[47] Bardají, M.; Laguna, A. J. Chem. Educ. 1999, 76, 201.

[48] Pyykkö, P. Angew. Chem. Int. Ed. 2004, 43, 4412.

[49] Roisnel, T.; Rodriguez-Carvajal, J. In Materials Science Forum, Proceedings of the Seventh European Powder Diffraction Conference (EPDIC 7); Delhez, R., Mittenmeijer, E. J., Eds., 2000, p 118.

[50] Boultif, A.; Louër, D. J. Appl. Cryst. 1991, 24, 987.

[51] Werner, P.-E.; Eriksson, L.; Westdahl, M. J. Appl. Cryst. 1985, 18, 367.

[52] Kraus, W.; Nolze, G. J. Appl. Cryst. 1996, 29, 301.

[52a] Gabe, E. J.; White, P. S.; Enright, G. D. DIFRAC: A Fortran 77 Control Routine for 4-Circle Diffractometers; N. R. C.: Ottawa, 1995.

[53] Gabe, E. J.; Page, Y. L.; Charland, J. P.; Lee, F. L.; White, P. S. J. Appl. Cryst. 1989, 22, 384.

[53a] Betteridge, P. W.; Carruthers, J. R.; Cooper, R. I.; Prout, K.; Watkin, D. J. J. Appl. Crystallogr. 2003, 36, 1487.

[54] Farrugia, L. J. J. Appl. Cryst. 1997, 30, 565.

[55] Fenn, T. D.; Ringe, D.; Petsko, G. A. J. Appl. Cryst. 2003, 36, 944.(Persistence of Vision Raytracing: (http://www.povray.org).

[56] International Tables for X-ray Crystallography; Kynoch Press: Birmingham, U.K. (present distributor Kluwer Academic Publishers: Boston, MA), 1975; Vol. IV.

[57] Sharpe, A. G. The Chemistry of Cyano Complexes of the Transition Metals; Academic Press: London, New York, San Francisco, 1976.

[58] Colacio, E.; Lloret, F.; Kivekäs, R.; Ruiz, J.; Suárez-Varelaa, J.; Sundberg, M. R. Chem. Commun. 2002, 592.

[59] Shi, Y.-J.; Chen, X.-T.; Li, Y.-Z.; Xue, Z.; You, X.-Z. New J. Chem. 2002, 26, 1711.

[60] Jürgens, B.; Höppe, H. A.; Schnick, W. Solid State Sci. 2002, 4, 821.

[61] Morsali, A.; Mahjoub, A. R. Helv. Chim. Acta 2004, 87, 2717.

[62] Dale, S. H.; Elsegood, M. R. J.; Kainth, S. Acta Cryst. C. 2004, 60, m76.

[63] Chomic, J.; Cernàk, J. J. Thermochim. Acta 1985, 93, 93.

[64] Cartraud, P.; Cointot, A.; Renaud, A. J. J. Chem. Soc., Faraday Trans. 1981, 77, 1561.

[65] Katz, M.J.; Aguiar, P.M.; Batchelor, R.J.; Bokov, A.A.; Ye, Z.-G.; Kroeker, S.; Leznoff, D.B. "Structure and Multinuclear Solid-State NMR of a Highly Birefringent Lead Gold Cyanide Coordination Polymer", J. Am. Chem. Soc., 2006, 128, 3669-3676.

[66] Fayon, F.; Farnan, I.; Bessada, C.; Coutures, J.; Massiot, D.; J.P., C. J. Am. Chem. Soc. 1997, 119, 6837.

[67] Carlucci, L.; Ciani, G.; Proserpio, D. M. Chem. Commun. 2004, 380.

[68] Wang, Z.; Jin, C.-M.; Shao, T.; Li, Y.-Z.; Zhang, K.-L.; Zhang, H.-T.; You, X.-Z. Inorg. Chem. Comm. 2002, 5, 642.

[69] Cui, Y.; Ngo, H. L.; White, P. S.; Lin, W. Inorg. Chem. 2002, 42, 652.

[70] Havinga, E. E.; Damsma, H.; Hokkeling, P. J. Less-Common Metals 1972, 27, 169

[71] Wahlstrom, E. E. Optical Crystallography; John Wiley and Sons: New York, Toronto, 1979.

[72] Hodgkinson, I. J.; Wu, Q. H. Birefringent Thin Films and Polarizing Elements; World Scientific Publishing Co. Pte. Ltd.: River Edge, 1997.

[73] Veber, M. J. Handbook of Optical Materials; C R C Press, 2003.

[74] Draper, N. D.; Batchelor, R. J.; Sih, B. C.; Ye, Z.-G.; Leznoff, D. B. Chem. Mater. 2003, 15, 1612.

[75] Newnham, R. E. Structure-property Relations; Springer-Verlag: New York, Heidelberg, Berlin, 1975.

[76] Hoskins, B. F.; Robson, R.; Scarlett, N. V. Y. Angew. Chem., Int. Ed. 1995, 34, 1203

TABLE 1

| | 1 |
|---|---|
| Empirical formula | $C_4H_2N_4Au_2OPb$ |
| Formula weight | 723.22 |
| Crystal system | Orthorhombic |
| Space group | P c m a |
| a, Å | 6.8938(8) |
| b, Å | 9.8074(9) |
| c, Å | 13.1773(19) |
| $V$, Å$^3$ | 890.92(18) |
| Z | 4 |
| T, K | 293 |
| $\lambda$, Å | 0.70930 |
| $\rho_{calcd}$, g•cm$^{-3}$ | 5.392 |
| $\mu$, mm$^{-1}$ | 51.725 |
| R$^a$ (I > 2.5$\sigma$(I)) | 0.049 |
| $R_w$$^a$ (I > 2.5$\sigma$(I)) | 0.058 |
| Goodness of fit | 1.25 |

$^a$Function minimized $\Sigma w(|F_o| - |F_c|)^2$ where $w^{-1} = [\sigma^2(F_o) + (0.03*F_o)^2]$, $R = \Sigma||F_o|-|F_c|| / \Sigma|F_o|$, $R_w = [\Sigma w(|F_o| - |F_c|)^2 / \Sigma w|F_o|^2]^{1/2}$.

TABLE 2

| | | | |
|---|---|---|---|
| Pb(1)-N(1) | 2.595(18) | Pb(1)-N(2) | 2.65(2) |
| Pb(1)-N(1') | 2.595(18) | Pb(1)-N(2') | 2.65(2) |
| Pb(1)-N(1*) | 2.87(2) | Pb(1)-O(1) | 2.57(2) |
| Pb(1)-O(1*) | 2.83(2) | Au(1)-Au(2) | 3.541(2) |
| Au(1)-Au(1") | 3.5222(8) | Au(2)-Au(1") | 3.454(2) |
| | | | |
| Pb(1)-N(1)-C(1) | 138(2) | Pb(1)-N(2)-C(2) | 132.1(19) |
| Pb(1)-N(1")-C(1") | 125(2) | N(1)-Pb(1)-N(2) | 83.1(6) |
| N(1)-Pb(1)-N(1") | 79.2(4) | N(1)-Pb(1)-N(1') | 87.2(9) |
| N(1)-Pb(1)-N(2') | 143.0(7) | N(1)-Pb(1)-N(1*) | 132.4(3) |
| N(2)-Pb(1)-N(1") | 131.9(6) | N(2) - Pb(1)-N(2') | 83.5(8) |
| N(2)-Pb(1)-N(1*) | 80.6(6) | N(1*)-Pb(1)-N(1") | 77.2(7) |
| O(1)-Pb(1)-O(1*) | 122.7(7) | | |

Symmetry transformations: ': x, -y-1,-z; *: x-1/2,-y+1,-z+1/2; ": x-1/2,y,-z+1/2

TABLE 3

|  | 3 | 4 | 5 | 6 | 7 | 8 |
|---|---|---|---|---|---|---|
| Empirical formula | $C_{19}H_{11}N_7Au_2Pb_1$ | $C_{19}H_{11}N_7Ag_2Pb_1$ | $C_{19}H_{11.66}N_7Au_2Mn_1O_{0.33}$ | $C_{28}H_{16}N_8Au_2Pb$ | $C_{24}H_{16}N_8Au_2Pb$ | $C_6H_8N_6Au_2Pb$ |
| Formula weight | 938.5 | 760.3 | 792.154 | 1065.64 | 1017.60 | 765.30 |
| Crystal system | Monoclinic | Monoclinic | Monoclinic | Orthorhombic | Monoclinic | Monoclinic |
| Space group | C 1 2/c 1 | C 1 2/c 1 | P 1 $2_1$/n 1 | F d d d | P 1 2/n 1 | P 1 $2_1$/c 1 |
| a, Å | 11.2566(15) | 11.3836(14) | 10.567(2) | 6.9317(13) | 10.4838(13) | 10.2194(2) |
| b, Å | 16.306(4) | 16.413(3) | 17.521(3) | 20.885(5) | 8.8934(7) | 11.5000(2) |
| c, Å | 12.052(2) | 11.867(2) | 12.336(2) | 36.459(5) | 13.3141(15) | 11.2160(3) |
| $\alpha$, ° | 90 | 90 | 90 | 90 | 90 | 90 |
| $\beta$, ° | 107.268(14) | 106.294(11) | 110.333(15) | 90 | 92.777(10) | 108.9117(13) |
| $\gamma$, ° | 90 | 90 | 90 | 90 | 90 | 90 |
| V, Å$^3$ | 21 12.4(7) | 2128.0(6) | 2141.6(7) | 5278.1(18) | 1239.9(2) | 1246.98(5) |
| Z | 4 | 4 | 4 | 8 | 2 | 4 |
| T, K | 293 | 293 | 293 | 293 | 293 | 100(2) |
| $\lambda$, Å | 0.71073 | 0.71073 | 0.71073 | 0.71073 | 0.71073 | 0.71073 |
| $\rho_{eated}$, g·cm$^3$ | 2.951 | 2.373 | 2.457 | 2.682 | 4.615 | 4.076 |
| $\mu$, mm$^{-1}$ R$^a$, (1 > 2.5 f(1)) | 21.851 | 9.782 | 14.268 | 17.489 | 37.204 | 36.918 |
| | 0.0317 | 0.0369 | 0.0442 | 0.0381 | 0.0327 | 0.0415 |
| $R_w^a$, (1 > 2.5 f(1)) | 0.0393 | 0.0335 | 0.0399 | 0.0554 | 0.0319 | 0.0491 |
| Goodness of fit | 1.2249 | 1.2317 | 1.4697 | 1.0860 | 1.3728 | 1.0674 |

[a]Function minimized $\Sigma w(|F_o| - |F_c|)^2$ where $w^{-1} = [\sigma^2(F_o) + (n*F_o)^2]$, $R = \Sigma||F_o| - |F_c|| / \Sigma|F_o|$, $R_w = [\Sigma w(|F_o| - |F_c|)^2 / \Sigma w|F_o|^2]^{1/2}$, n = 0.020 for **3**, 0.010 for **4**, 0.010 for **5**, 0.040 for **6**, 0.010 for **7**, and 0.030 for **8**.

**Claims**

1. A birefringent material comprising a coordination polymer having a birefringent value exceeding 0.17, or more particularly having a birefringent value exceeding 0.38, wherein said polymer comprises units having the formula:

$$M(L)_X[M'(Z)_Y]_N$$

   wherein M and M' are the same or different metals capable of forming a coordinate complex with the Z moiety;
   L is a ligand;
   Z is selected from the group consisting of halides, pseudohalides, thiolates, alkoxides and amides;
   X is between 0 - 12;
   Y is between 2 - 9; and
   N is between 1 - 5.

2. The material as defined in claim 1, wherein said polymer comprises a divergent, bridging donor ligand.

3. The material as defined in claim 1, wherein Z is a pseudohalide selected from the group consisting of CN, SCN, SeCN, TeCN, OCN, CNO and NNN.

4. The material as defined in claim 3, wherein Z is CN.

5. The material as defined in any one of claims 1 to 4, wherein M is selected from the group consisting of Pb, Mn, Bi and Zn.

6. The material as defined in any one of claims 1 to 5, wherein M' is a metal selected from the group consisting of Au, Ag, Hg, Cu, Ni, Pd, Pt, Rh and Ir.

7. The material as defined in any one of claims 1 to 6, wherein L is selected from the group consisting of heterocyclic amines, heterocyclic ethers, thiophenes and compounds comprising one or more aromatic hydrocarbon moieties.

8. The material as defined in claim 7, wherein L is a terpyridine.

9. The material as defined in claim 8, wherein L is 2,2';6'2"-terpyridine.

10. The material as defined in claim 7, wherein L is a phenanthroline.

11. The material as defined in claim 10, wherein L is 1,10-phenanthroline.

12. The material as defined in claim 7, wherein L is a bipyridine.

13. The material as defined in claim 12, wherein L is 2,2'-bipyridine.

14. The material as defined in any one of claims 1 to 6, wherein L is $H_2O$.

15. The material as defined in any one of claims 1 to 6, comprising an anionic or cationic charge-balancing counterion.

16. The material as defined in claim 2, wherein said donor ligand is selected from the group consisting of pyrazine, dicyanamide and 1,3,5-tricarboxylatobenzene.

17. The material as defined in claim 1, wherein M is Pb; L is selected from the group consisting of 2,2',6'2"-terpyridine, 1,10-phenanthroline, 2,2'-bipyridine, and 1,2-ethylenediamine; M' is selected from the group consisting of Au and Ag; X is 1 or 2 ; Y is 2 and N is 2.

18. The material as defined in any one of claims 1 to 15, wherein said polymer comprises a luminescent moiety.

19. The material as defined in claim 1, wherein M is Pb; L is terpyridine; X is 1; M' is Pt; Z is CN or SCN; Y is 4 and N is 1.

20. A birefringent thin film comprising a material as defined in any one of claims 1 to 19.

21. The use of a coordination polymer having a birefringent value exceeding 0.17, or more particularly having a birefringent value exceeding 0.38, as a birefringent material.

22. The use as defined in claim 21, wherein said birefringent material is used in an optical device.

23. The use as defined in claim 22, wherein said optical device is selected from the group consisting of a common-path profilometric system, a compact disk reader, an optical data transmission device, an image processing instrument, a light refocusing system, a microscope and an intraocular element.

24. The use of a birefringent material as defined in any one of claims 1 to 19 as an analyte detector.

25. The use as defined in claim 21, wherein said polymer is luminescent.

26. A method of manufacturing a birefringent device comprising incorporating in said device a coordination polymer having a birefringent value exceeding 0.17.

27. A method of manufacturing a birefringent material comprising forming said material from a coordination polymer having a birefringent value exceeding 0.17.

**Patentansprüche**

1. Doppelbrechendes Material, das ein Koordinationspolymer umfasst, das einen Doppelbrechungswert von mehr als 0,17 oder insbesondere einen Doppelbrechungswert von mehr als 0,38 aufweist, wobei das genannte Polymer Einheiten umfasst, die folgende Formel aufweisen:

$$M(L)_X LM' (Z)_Y]_N$$

   wobei M und M' die gleichen oder verschiedene Metalle sind, die einen Koordinatenkomplex mit dem Z-Teil bilden können;
   L ein Ligand ist;
   Z aus der Gruppe ausgewählt wird, die aus Folgendem besteht: Halogenide, Pseudohalogenide, Thiolate, Alkoxide und Amide;
   X zwischen 0 - 12 beträgt;
   Y zwischen 2 - 9 beträgt und
   N zwischen 1 - 5 beträgt.

2. Material nach Anspruch 1, wobei das genannte Polymer einen divergenten Überbrückungsdonorliganden umfasst.

3. Material nach Anspruch 1, wobei Z ein Pseudohalogenid ist, das aus der Gruppe ausgewählt wird, die aus Folgendem besteht: CN, SCN, SeCN, TeCN, OCN, CNO und NNN.

4. Material nach Anspruch 3, wobei Z CN ist.

5. Material nach einem der Ansprüche 1 bis 4, wobei M aus der Gruppe ausgewählt wird, die aus Folgendem besteht: Pb, Mn, Bi und Zn.

6. Material nach einem der Ansprüche 1 bis 5, wobei M' ein Metall ist, das aus der Gruppe ausgewählt wird, die aus Folgendem besteht: Au, Ag, Hg, Cu, Ni, Pd, Pt, Rh und Ir.

7. Material nach einem der Ansprüche 1 bis 6, wobei L aus der Gruppe ausgewählt wird, die aus Folgendem besteht: heterocyclische Amine, heterocyclische Ether, Thiophene und Verbindungen, die ein oder mehrere aromatische Kohlenwasserstoffteile umfassen.

8. Material nach Anspruch 7, wobei L ein Terpyridin ist.

9. Material nach Anspruch 8, wobei L 2,2';6'2"-terpyridin ist.

**10.** Material nach Anspruch 7, wobei L ein Phenanthrolin ist.

**11.** Material nach Anspruch 10, wobei L 1,10-Phenanthrolin ist.

**12.** Material nach Anspruch 7, wobei L ein Bipyridin ist.

**13.** Material nach Anspruch 12, wobei L 2,2"-Bipyridin ist.

**14.** Material nach einem der Ansprüche 1 bis 6, wobei L H2O ist.

**15.** Material nach einem der Ansprüche 1 bis 6, das ein anionisches oder kationisches ladungsausgleichendes Gegenion umfasst.

**16.** Material nach Anspruch 2, wobei der genannte Donorligand aus der Gruppe ausgewählt wird, die aus Folgendem besteht: Pyrazin, Dicyanamid und 1,3,5-tricarboxylatobenzen.

**17.** Material nach Anspruch 1, wobei M Pb ist; L aus der Gruppe ausgewählt wird, die aus Folgendem besteht: 2,2';6'2"-Terpyridin, 1,10-Phenanthrolin, 2,2'-Bipyridin und 1,2-Ethylenediamin; M' aus der Gruppe ausgewählt wird, die aus Folgendem besteht: Au und Ag; X 1 oder 2 ist; Y 2 ist und N 2 ist.

**18.** Material nach einem der Ansprüche 1 bis 15, wobei das genannte Polymer ein lumineszierender Teil ist.

**19.** Material nach Anspruch 1, wobei M Pb ist; L Terpyridin ist; X 1 ist; M' Pt ist; Z CN oder SCN ist; Y 4 ist und N 1 ist.

**20.** Doppelbrechender Dünnfilm, der ein Material nach einem der Ansprüche 1 bis 19 umfasst.

**21.** Verwendung eines Koordinationspolymers als doppelbrechendes Material, der einen Doppelbrechungswert von mehr als 0,17 oder insbesondere einen Doppelbrechungswert von mehr als 0,38 aufweist.

**22.** Verwendung nach Anspruch 21, wobei das genannte doppelbrechende Material in einer optischen Vorrichtung verwendet wird.

**23.** Verwendung nach Anspruch 22, wobei die genannte optische Vorrichtung aus der Gruppe ausgewählt wird, die aus Folgendem besteht: einem Profilometriesystem mit gemeinsamem Pfad, einem Compact-Disk-Leser, einer optischen Datenübertragungsvorrichtung, einem Bildverarbeitungsinstrument, einem Lichtrefokussierungssystem, einem Mikroskop und einem intraokularen Element.

**24.** Verwendung eines doppelbrechenden Materials nach einem der Ansprüche 1 bis 19 als Analytdetektor.

**25.** Verwendung nach Anspruch 21, wobei das genannte Polymer lumineszierend ist.

**26.** Verfahren zur Herstellung einer doppelbrechenden Vorrichtung, das das Integrieren eines Koordinationspolymers mit einem Doppelbrechungswert von mehr als 0,17 in die genannte Vorrichtung umfasst.

**27.** Verfahren zur Herstellung eines doppelbrechenden Materials, das das Bilden des genannten Materials aus einem Koordinationspolymer mit einem Doppelbrechungswert von mehr als 0,17 umfasst.

**Revendications**

**1.** Matériau biréfringent comprenant un polymère de coordination ayant une valeur de biréfringence supérieure à 0,17, ou plus particulièrement ayant une valeur de biréfringence supérieure à 0,38, dans lequel ledit polymère comprend des unités ayant la formule :

$$M(L)_X[M'(Z)_Y]_N$$

dans laquelle M et M' sont des métaux identiques ou différents capables de former un complexe de coordination avec la fraction Z ;

L est un ligand ;

Z est sélectionné dans le groupe constitué d'halogénures, de pseudohalogénures, de thiolates, d'alcoxydes et d'amides ;

X vaut entre 0 et 12 ;

Y vaut entre 2 et 9 ; et

N vaut entre 1 et 5.

2. Matériau selon la revendication 1, dans lequel ledit polymère comprend un ligand donneur de pontage divergent.

3. Matériau selon la revendication 1, dans lequel Z est un pseudohalogénure sélectionné dans le groupe constitué de CN, SCN, SeCN, TeCN, OCN, CNO et NNN.

4. Matériau selon la revendication 3, dans lequel Z est CN.

5. Matériau selon l'une quelconque des revendications 1 à 4, dans lequel M est sélectionné dans le groupe constitué de Pb, Mn, Bi et Zn.

6. Matériau selon l'une quelconque des revendications 1 à 5, dans lequel M' est un métal sélectionné dans le groupe constitué de Au, Ag, Hg, Cu, Ni, Pd, Pt, Rh et Ir.

7. Matériau selon l'une quelconque des revendications 1 à 6, dans lequel L est sélectionné dans le groupe constitué d'amines hétérocycliques, d'éthers hétérocycliques, de thiophènes et de composés comprenant une ou plusieurs fractions hydrocarbures aromatiques.

8. Matériau selon la revendication 7, dans lequel L est une terpyridine.

9. Matériau selon la revendication 8, dans lequel L est une 2,2';6'2"-terpyridine.

10. Matériau selon la revendication 7, dans lequel L est une phénanthroline.

11. Matériau selon la revendication 10, dans lequel L est une 1,10-phénanthroline.

12. Matériau selon la revendication 7, dans lequel L est une bipyridine.

13. Matériau selon la revendication 12, dans lequel L est une 2,2'-bipyridine.

14. Matériau selon l'une quelconque des revendications 1 à 6, dans lequel L est $H_2O$.

15. Matériau selon l'une quelconque des revendications 1 à 6, comprenant un contre-ion d'équilibrage de charge anionique ou cationique.

16. Matériau selon la revendication 2, dans lequel ledit ligand donneur est sélectionné dans le groupe constitué de la pyrazine, du dicyanamide et du 1,3,5-tricarboxylatobenzène.

17. Matériau selon la revendication 1, dans lequel M est Pb ; L est sélectionné dans le groupe constitué de la 2,2';6'2"-terpyridine, de la 1,10-phénanthroline, de la 2,2'-bipyridine, et de la 1,2-éthylènediamine ; M' est sélectionné dans le groupe constitué d'Au et d'Ag ; X vaut 1 ou 2 ; Y vaut 2 et N vaut 2.

18. Matériau selon l'une quelconque des revendications 1 à 15, dans lequel ledit polymère comprend une fraction luminescente.

19. Matériau selon la revendication 1, dans lequel M est Pb ; L est la terpyridine ; X vaut 1 ; M' est Pt ; Z est CN ou SCN ; Y vaut 4 et N vaut 1.

20. Film mince biréfringent comprenant un matériau selon l'une quelconque des revendications 1 à 19.

21. Utilisation d'un polymère de coordination ayant une valeur de biréfringence supérieure à 0,17, ou plus particulièrement ayant une valeur de biréfringence supérieure à 0,38, comme matériau biréfringent.

**22.** Utilisation selon la revendication 21, dans laquelle ledit matériau biréfringent est utilisé dans un dispositif optique.

**23.** Utilisation selon la revendication 22, dans laquelle ledit dispositif optique est sélectionné dans le groupe constitué d'un système de profilométrie à parcours commun, d'un lecteur de disque compact, d'un dispositif de transmission de données optiques, d'un instrument de traitement d'images, d'un système de refocalisation de la lumière, d'un microscope et d'un élément intra-oculaire.

**24.** Utilisation d'un matériau biréfringent selon l'une quelconque des revendications 1 à 19 comme détecteur d'analyte.

**25.** Utilisation selon la revendication 21, dans laquelle ledit polymère est luminescent.

**26.** Procédé de fabrication d'un dispositif biréfringent comprenant l'incorporation dans ledit dispositif d'un polymère de coordination ayant une valeur de biréfringence supérieure à 0,17.

**27.** Procédé de fabrication d'un matériau biréfringent comprenant la formation dudit matériau à partir d'un polymère de coordination ayant une valeur de biréfringence supérieure à 0,17.

**(a)**

**(b)**

**FIGURE   1**

**FIGURE**

2

(a)
Au1
C1
N1
Pb1
b
c
a

(b)

(c)
a
b

**FIGURE 3**

(a)

$\delta_{22}$

$\delta_{11}$

(b)

$\delta_{22}$

$\delta_{11}$

$\delta_{11} \approx \delta_{22}$

FIGURE 4

(a)

(b)

FIGURE 5

FIGURE 6(a)

N6 N7 N1 Au1 N2 N5 Mn1 N3 Au2 N4

FIGURE 6(b)

(a)

(b)

FIGURE
7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JANIAK, C.** *Dalton Trans.,* 2003, 2781
- **CASSOUX, P. ; VALADE, L. ; KOBAYASHI, H. ; KOBAYASHI, A. ; CLARK, R. A. ; UNDERHILL, A. E.** *Coord. Chem. Rev.,* 1991, vol. 110, 115
- **OUAHAB, L. J.** *Chem. Soc., Dalton Trans.,* 1997, vol. 9, 1909
- **DECURTINS, S. ; PELLAUX, R. ; ANTORRENA, G. ; PALACIO, F.** *Coord. Chem. Rev.,* 1999, vol. 190-192, 841
- **ROUNDHILL, D. M. ; FACKLER, J. P., JR.** Optoelectronic Properties of Inorganic Compounds. Plenum Press, 1999
- **MOLER, D. B. ; LI, H. ; CHEN, B. ; REINEKE, T. M. ; O'KEEFFE, M. ; YAGHI, O. M.** *Acc. Chem. Res.,* 2001, vol. 34, 319
- **CHESNUT, D. J. ; HAGRMAN, D. ; ZAPF, P. J. ; HAMMOND, R. P. ; LADUCA, R. ; HAUSHALTER, R. C. ; ZUBIETA, J.** *Coord. Chem. Rev.,* 1999, vol. 192, 737
- **WAHLSTROM, E. E.** Optical Crystallography. John Wiley and Sons, 1979
- **HODGKINSON, I. J. ; WU, Q. H.** Birefringent Thin Films and Polarizing Elements. World Scientific Publishing Co. Pte. Ltd, 1997
- **VEBER, M. J.** Handbook of Optical Materials. C R C Press
- **CHELKOWSKI, A.** Dielectric Physics. Elsevier Scientific Pub. Co, 1980
- **NEWNHAM, R. E.** Structure-property Relations. Springer-Verlag, 1975
- **CHOU, C. ; SHYU, J.-C. ; HUANG, Y.-C. ; YUAN, C.-K.** *Applied Optics,* 1998, vol. 37, 4137
- **KINNSTATTER, K. ; OJIMA, M. ; YONEZAWA, S.** *Applied Optics,* 1990, vol. 29, 4408
- **LESSO, J. P. ; DUNCAN, A. J. ; SIBBETT, W. ; PADGETT, M. J.** *Applied Optics,* 2000, vol. 39, 592
- **DAVIS, J. A. ; EVANS, G. H. ; CRABTREE, K. ; MORENO, I.** *Applied Optics,* 2004, vol. 43, 6235
- **KIKUTA, H. ; IWATA, K. ; SHIMOMURA, H.** *J. Opt. Soc. Am. A,* 1992, vol. 9, 814
- **SANYAL, S. ; GHOSH, A.** *Applied Optics,* 2000, vol. 39, 2321
- **PARK, J.-H. ; JUNG, S. ; CHOI, H. ; LEE, B.** *Optics Express,* 2003, vol. 11, 1862
- **WAAGAARD, O. H. ; SKAAR, J.** *J. Opt. Soc. Am. A,* 2004, vol. 21, 1207

- **SANYAL, S. ; BANDYOPADHYAY, P. ; GHOSH, A.** *Opt. Eng.,* 1998, vol. 37, 592
- **LEFEBVRE, J. ; LEZNOFF, D.B.** Metal and Metalloid-containing Polymers. Wiley, 2005, vol. 5, 155
- **JANIAK, C.** *Dalton Trans.,* 2003, 2781
- **OUAHAB, L.** *J. Chem. Soc., Dalton Trans.,* 1997, vol. 9, 1909
- **DECURTINS, S. ; PELLAUX, R. ; ANTORRENA, G. ; PALACIO, F.** *Coord. Chem. Rev.,* 1999, 190-192, 841
- **ROUNDHILL, D. M. ; FACKLER, J. P., JR.** Optoelectronic Properties of Inorganic Compounds;. Plenum Press, 1999
- **MILLER, J. S.** *Inorg. Chem.,* 2000, vol. 39, 4392
- **VERDAGUER, M. ; BLEUZEN, A. ; MARVAUND, V. ; VAISSERMANN, J. ; SEULEIMAN, M. ; DESPLANCHES, C. ; SCUILLER, A. ; TRAIN, C. ; GARDE, R. ; GELLY, G.** *Coord. Chem. Rev.,* 1999, vol. 190, 1023
- **DRAPER, N.D. ; BATCHELOR, R.J. ; SIH, B.C. ; YE, Z.-G. ; LEZNOFF, D.B.** Synthesis, structure and properties of (tmeda)Cu[Hg(CN)2]2[HgCl4]: A non-centrosymmetric 2-D layer structure that exhibits strong optical anisotropy. *Chem. Mater.,* 2003, vol. 15, 1612-1616
- **JANIAK, C. ; SCHARMANN, T. G. ; ALBRECHT, P. ; MARLOW, F. ; MACDONALD, R.** *J. Am. Chem. Soc.,* 1996, vol. 118, 6307
- **FROMM, K. M. ; GUENEAU, E. D. ; RIVERA, J.-P. ; BERNARDINELLI, G. Z.** *Anorg. Allg. Chem.,* 2002, vol. 628, 171
- **DONG, W. ; ZHU, L.-N. ; SUN, Y.-Q. ; LIANG, M. ; LIU, Z.-Q. ; LIAO, D.-Z. ; JIANG, Z.-H. ; YAN, S.-P. ; CHENG, P.** *Chem. Commun.,* 2003, 2544-2545
- **DONG, W. ; ZHU, L.-N. ; SUN, Y.-Q. ; LIANG, M. ; LIU, Z.-Q. ; LIAO, D.-Z. ; JIANG, Z.-H. ; YAN, S.-P. ; CHENG, P.** *Chem. Commun.,* 2003, 2544-2545
- **ABRAHAMS, S. C. ; ZYONTZ, L. E. ; BERNSTEIN, J. L.** *J. Chem. Phys.,* 1982, vol. 76, 5458
- **ABRAHAMS, S. C. ; BERNSTEIN, J. L. ; LIMINGA, R. ; EISENMANN, E. T.** *J. Chem. Phys.,* 1980, vol. 73, 4585
- **COLACIO, E. ; LLORET, F. ; KIVEKAES, R. ; RUIZ, J. ; SUAREZ-VARELA, J. ; SUNDBERG, M. R.** *Chem. Commun.,* 2002, 592-593

- **HOSKINS, B. F. ; ROBSON, R. ; SCARLETT, N. V. Y.** *Angew. Chem. Int. Ed. Engl.,* 1995, vol. 34, 1203
- **STIER, A. ; RANGE, K. -J.** *Z. Naturforsch,* 1996, vol. 51b, 698
- **STIER, A. ; RANGE, K. - J.** *Z. Kristallogr.,* 1997, vol. 212, 51
- **ASSEFA, Z. ; SHANKLE, G. ; PATTERSON, H. H. ; REYNOLDS, R.** *Inorg. Chem.,* 1994, vol. 33, 2187
- **ASSEFA, Z. ; STAPLES, R. J. ; FACKLER, J. P., JR. ; PATTERSON, H. H. ; SHANKLE, G.** *Acta Crystallogr.,* 1995, vol. C51, 2527
- **YE, Q. ; LI, Y.-H. ; WU, Q. ; SONG, Y.-M. ; WANG, J.-X. ; ZHAO, H. ; XIONG, R.-G.** *Xue, Z. Chem. Eur. J.,* 2005, vol. 11, 988
- **SINGH, N. B. ; SUHRE, D. R. ; GREEN, K. ; FERNELIUS, N. ; HOPKINS, F. K.** *J. Crystal Growth,* 2005, vol. 274, 132
- **SUI, B. ; ZHAO, W. ; MA, G. ; OKAMURA, T.-A. ; FAN, J. ; LI, Y.-Z. ; TANG, S.-H. ; SUN, W.-Y. ; UEYAMA, N. J.** *Mater. Chem.,* 2004, vol. 14, 1631
- **MENG, X. ; SONG, Y. ; HOU, H. ; FAN, Y. ; LI, G. ; ZHU, Y.** *Inorg. Chem.,* 2003, vol. 42, 1306
- **GULOY, A. M. ; TANG, Z. ; MIRANDA, P. B. ; SRDANOV, V. I.** *Adv. Mater.,* 2001, vol. 13, 833
- **KONDO, T. ; IWAMOTO, S. ; HAYASE, S. ; TANAKA, K. ; ISHI, J. ; MIZUNO, M. ; EMA, K. ; ITO, R.** *Solid State Comm.,* 1998, vol. 105, 503
- **NEWNHAM, R.** *MRS Bulletin,* 1997, vol. XXII, 20
- **KAGAN, C. R. ; MITZI, D. B. ; DIMITRAKOPOULOS, C. D.** *Science,* 1999, vol. 286, 945
- **MITZI, D. B. ; WANG, S. ; FEILD, C. A. ; CHESS, C. A. ; GULOY, A. M.** *Science,* 1995, vol. 267, 1473
- **SIGMAN, M. B. J. ; KORGEL, B. A.** *J. Am. Chem. Soc.,* 2005, vol. 127, 10089
- **YILMAZ, V. T. ; CAGLAR, S. ; HARRISON, W. T. A.** *Z. Anorg. Allg. Chem.,* 2004, vol. 630, 948
- **FOREMAN, M. R. ; PLATER, M. J. ; SKAKLE, J. M. S.** *J. Chem. Soc., Dalton Trans.,* 2001, 1897
- **ZHU, L.-H. ; ZENG, M.-H. ; YE, B.-H. ; CHEN, X.-M.** *Z. Anorg. Allg. Chem,* 2001, vol. 630, 952
- **LI, G. ; HOU, H. ; LI, L. ; MENG, X. ; FAN, Y. ; ZHU, Y.** *Inorg. Chem.,* 2003, vol. 42, 4995
- **SHI, Y.-J. ; LI, L.-H. ; LI, Y.-Z. ; CHEN, X.-T. ; XUE, Z. ; YOU, X.-Z.** *Polyhedron,* 2003, vol. 22, 917
- **HOLLOWAY, C., E. ; MELNIK, M.** *Main Group Metal Chemistry,* 1997, vol. 20, 399
- **PARR, J.** Comprehensive coordination chemistry II: from biology to nanotechnology. Elsevier Pergamon, 2004, vol. 3, 545
- **ENGELHARDT, L. M. ; PATRICK, J. M. ; WHITAKER, C. R. ; WHITE, A. H.** *Aust. J. Chem.,* 1987, vol. 40, 2107
- **ENGELHARDT, L. M. ; HARROWFIELD, J. M. ; MIYAMAE, H. ; PATRICK, J. M. ; SKELTON, B. W. ; SOUDI, A. A. ; WHITE, A. H.** *Aust. J. Chem.,* 1996, vol. 49, 1111
- **SHIMONI-LIVNY, L. ; GLUSKER, J. P. ; BOCK, C. W.** *Inorg. Chem.,* 1998, vol. 37, 1853
- **SHI, Y.-J. ; CHEN, X.-T. ; CAI, C.-X. ; ZHANG, Y. ; XUE, Z. ; YOU, X.-Z. ; PENG, S.-M. ; LEE, G.-H.** *Inorg. Chem. Comm.,* 2002, vol. 5, 621
- **SHI, Y.-J. ; XU, Y. ; ZHANG, Y. ; HUANG, B. ; ZHU, D.-R. ; JIN, C.-M. ; ZHU, H.-G. ; YU, Z. ; CHEN, X.-T. ; YOU, X.-Z.** *Chem. Lett.,* 2001, 678
- **CALABRESE, J. ; JONES, N. L. ; HARLOW, R. L. ; HERRON, N. ; THORN, D. L. ; WANG, Y.** *J. Am. Chem. Soc.,* 1991, vol. 113, 2328
- **CUI, Y. ; REN, J. ; CHEN, G. ; YU, W. ; QIAN, Y.** *Acta Cryst C,* 2000, vol. 56, e552
- **NORDELL, K. J. ; SCHULTZ, K. N. ; HIGGINS, K. A. ; SMITH, M. D.** *Polyhedron,* 2004, vol. 23, 2161
- **MORSALI, A. ; MAHJOUB, A.** *Polyhedron,* 2004, vol. 23, 2427
- **DUNBAR, K. R. ; HEINTZ, R. A.** *Prog. Inorg. Chem.,* 1997, vol. 45, 283
- **LEFEBVRE, J. ; LEZNOFF, D. B.** Metal and Metalloid-containing polymers. Wiley, 2005, vol. 5, 155-208
- **IWAMOTO, T.** Comprehensive Supramolecular Chemistry. Pergamon Press, 1996
- **OHBA, M. ; OKAWA, H.** *Coord. Chem. Rev.,* 2000, vol. 198, 313
- **BRIMAH, A. K. ; SCHWARZ, P. ; FISCHER, R. D. ; DAVIES, N. A ; HARRIS, R. K.** *J. Organomet. Chem.,* 1998, vol. 568, 1
- **BEHRENS, U. ; BRIMAH, A. K. ; SOLLMAN, T. M. ; FISCHER, D. R.** *Organometallics,* 1992, vol. 11, 1718
- **ZUBKOV, V. G. ; TYUTYUNNIK, A. P. ; BERGER, I. F. ; MAKSIMOVA, L. G. ; DENISOVA, T. A. ; POLYAKOV, E. V. ; KAPLAN, I. G. ; VORONIN, V. I.** *Solid State Sci.,* 2001, vol. 3, 361
- **ZHUKOV, V. P. ; ZAINULLINA, V. M. ; ZUBKOV, V. G. ; TYUTYUNNIK, A. P. ; DENISOVA, T. A.** *Solid State Sci.,* 2001, vol. 3, 539
- **PATTERSON, H. H. ; BOURASSA, J. ; SHANKLE, G.** *Inorg. Chim. Acta,* 1994, vol. 226, 345
- **LEZNOFF, D. B. ; XUE, B.-Y. ; PATRICK, B. O. ; SANCHEZ, V. ; THOMPSON, R. C.** *Chem. Commun.,* 2001, vol. 3, 259
- **LEZNOFF, D. B. ; XUE, B.-Y. ; STEVENS, C. L. ; STORR, A. ; THOMPSON, R. C. ; PATRICK, B. O.** *Polyhedron,* 2001, vol. 20, 1247
- **LEZNOFF, D. B. ; XUE, B.-Y. ; BATCHELOR, R. J. ; EINSTEIN, F. W. B. ; PATRICK, B. O.** *Inorg. Chem.,* 2001, vol. 40, 6026
- **LEFEBVRE, J. ; BATCHELOR, R. J. ; LEZNOFF, D. B.** *J. Am. Chem. Soc.,* 2004, vol. 126, 16117

- **RAWASHDEH-OMARY, M. A. ; OMARY, M. A. ; PATTERSON, H. H.** *J. Am. Chem. Soc.,* 2000, vol. 122, 10371
- **RAWASHDEH-OMARY, M. A. ; OMARY, M. A. ; PATTERSON, H. H. ; FACKLER, J. P., JR.** *J. Am. Chem. Soc.,* 2001, vol. 123, 11237
- **FERNANDEZ, E. J. ; LOPEZ-DE-LUZURIAGA, J. M. ; MONGE, M. ; OLMOS, M. E. ; PEREZ, J. ; LAGUNA, A.** *J. Am. Chem. Soc.,* 2002, vol. 124, 5942
- **FERNANDEZ, E. J. ; LOPEZ-DE-LUZURIAGA, J. M. ; MONGE, M. ; OLMOS, M. E. ; PEREZ, J. ; LAGUNA, A. ; MOHAMED, A. A. ; FACKLER, J. P., JR.** *J. Am. Chem. Soc.,* 2003, vol. 125, 2022
- **WANG, S. ; GARZON, G. ; KING, C. ; WANG, J.-C. ; FACKLER, J. P.** *Inorg. Chem.,* 1989, vol. 28, 4623
- **BARDAJÍ, M. ; LAGUNA, A.** *J. Chem. Educ.,* 1999, vol. 76, 201
- **PYYKKÖ, P.** *Angew. Chem. Int. Ed.,* 2004, vol. 43, 4412
- **ROISNEL, T. ; RODRIGUEZ-CARVAJAL, J.** Materials Science Forum, Proceedings of the Seventh European Powder Diffraction Conference (EPDIC 7). 2000, 118
- **BOULTIF, A. ; LOUËR, D. J.** *Appl. Cryst.,* 1991, vol. 24, 987
- **WERNER, P.-E. ; ERIKSSON, L. ; WESTDAHL, M. J.** *Appl. Cryst.,* 1985, vol. 18, 367
- **KRAUS, W. ; NOLZE, G.** *J. Appl. Cryst.,* 1996, vol. 29, 301
- **GABE, E. J. ; WHITE, P. S. ; ENRIGHT, G. D.** DIFRAC: A Fortran 77 Control Routine for 4-Circle Diffractometers. N. R. C, 1995
- **GABE, E. J. ; PAGE, Y. L. ; CHARLAND, J. P. ; LEE, F. L. ; WHITE, P. S.** *J. Appl. Cryst.,* 1989, vol. 22, 384
- **BETTERIDGE, P. W. ; CARRUTHERS, J. R. ; COOPER, R. I. ; PROUT, K. ; WATKIN, D. J.** *J. Appl. Crystallogr.,* 2003, vol. 36, 1487
- **FARRUGIA, L. J.** *J. Appl. Cryst.,* 1997, vol. 30, 565
- **FENN, T. D. ; RINGE, D. ; PETSKO, G. A.** *J. Appl. Cryst.,* 2003, vol. 36, 944, http://www.povray.org
- International Tables for X-ray Crystallography. Kynoch Press, 1975, vol. IV
- **SHARPE, A. G.** The Chemistry of Cyano Complexes of the Transition Metals. Academic Press, 1976
- **COLACIO, E. ; LLORET, F. ; KIVEKÄS, R. ; RUIZ, J. ; SUÁREZ-VARELAA, J. ; SUNDBERG, M. R.** *Chem. Commun.,* 2002, 592
- **SHI, Y.-J. ; CHEN, X.-T. ; LI, Y.-Z. ; XUE, Z. ; YOU, X.-Z.** *New J. Chem,* 2002, vol. 26, 1711
- **JÜRGENS, B. ; HÖPPE, H. A. ; SCHNICK, W.** *Solid State Sci.,* 2002, vol. 4, 821
- **MORSALI, A. ; MAHJOUB, A. R.** *Helv. Chim. Acta,* 2004, vol. 87, 2717
- **DALE, S. H. ; ELSEGOOD, M. R. J. ; KAINTH, S.** *Acta Cryst. C.,* vol. 60, m76
- **CHOMIC, J. ; CERNÀK, J. J.** *Thermochim. Acta,* 1985, vol. 93, 93
- **CARTRAUD, P.; COINTOT, A. ; RENAUD, A. J.** *J. Chem. Soc., Faraday Trans.,* 1981, vol. 77, 1561
- **KATZ, M.J. ; AGUIAR, P.M. ; BATCHELOR, R.J. ; BOKOV, A.A. ; YE, Z.-G. ; KROEKER, S. ; LEZNOFF, D.B.** Structure and Multinuclear Solid-State NMR of a Highly Birefringent Lead Gold Cyanide Coordination Polymer. *J. Am. Chem. Soc.,* 2006, vol. 128, 3669-3676
- **FAYON, F. ; FARNAN, I. ; BESSADA, C. ; COUTURES, J. ; MASSIOT, D. ; J.P., C.** *J. Am. Chem. Soc.,* 1997, vol. 119, 6837
- **CARLUCCI, L. ; CIANI, G. ; PROSERPIO, D. M.** *Chem. Commun.,* 2004, 380
- **WANG, Z. ; JIN, C.-M. ; SHAO, T. ; LI, Y.-Z. ; ZHANG, K.-L. ; ZHANG, H.-T. ; YOU, X.** *Z. Inorg. Chem. Comm.,* 2002, vol. 5, 642
- **CUI, Y. ; NGO, H. L. ; WHITE, P. S. ; LIN, W.** *Inorg. Chem.,* 2002, vol. 42, 652
- **HAVINGA, E. E. ; DAMSMA, H. ; HOKKELING ; P. J. LESS.** *Common Metals,* 1972, vol. 27, 169
- **WAHLSTROM, E. E.** Optical Crystallography. John Wiley and Sons, 1979
- **VEBER, M. J.** Handbook of Optical Materials. C R C Press, 2003
- **DRAPER, N. D. ; BATCHELOR, R. J. ; SIH, B. C. ; YE, Z.-G. ; LEZNOFF, D. B.** *Chem. Mater.,* 2003, vol. 15, 1612
- **HOSKINS, B. F. ; ROBSON, R. ; SCARLETT, N. V. Y.** *Angew. Chem., Int. Ed.,* 1995, vol. 34, 1203